# EUROPÄISCHE PATENTSCHRIFT

(11) **EP 3 797 918 B1**
(45) Veröffentlichungstag und Bekanntmachung des Hinweises auf die Patenterteilung: **24.07.2024**
(21) Anmeldenummer: 20198263.4
(22) Anmeldetag: 25.09.2020
(51) Int. Cl.: B23K 26/03, B23K 26/06, B23K 26/082, B23K 26/242, B23K 26/21, B23K 26/142, H02K 15/00, B23K 101/38

(54) **VORRICHTUNG UND VERFAHREN ZUM VERSCHWEISSEN VON LEITERENDEN EINES BAUTEILS EINER ELEKTRISCHEN MASCHINE**
DEVICE AND METHOD FOR WELDING CONDUCTOR ENDS OF A COMPONENT OF AN ELECTRIC MACHINE
DISPOSITIF ET PROCÉDÉ DE SOUDAGE DES EXTRÉMITÉS CONDUCTRICES D'UN COMPOSANT D'UNE MACHINE ÉLECTRIQUE

(30) Priorität: 27.09.2019 DE 102019126158; 13.05.2020 EP 20174325
(43) Veröffentlichungstag der Anmeldung: 31.03.2021
(73) Patentinhaber: Grob-Werke GmbH & Co. KG, 87719 Mindelheim (DE)
(72) Erfinder: Hofmann, Konstantin, 87719 Mindelheim (DE); Schürer, René, 86415 Mering (DE)
(74) Vertreter: KASTEL Patentanwälte PartG mbB

(56) Entgegenhaltungen:
- EP-A1- 2 986 412
- EP-A1- 3 088 124
- DE-A1- 102018 103 100
- US-A- 5 208 699
- US-A1- 2010 078 413

## Beschreibung

Die Erfindung betrifft eine Vorrichtung zum Verschweißen von Leiterenden, die an einem Bauteil einer elektrischen Maschine in einer Leiterendenanordnung angeordnet sind. Weiter betrifft die Erfindung ein Verfahren zum Verschweißen von Leiterenden, die an einem Bauteil einer elektrischen Maschine in einer Leiterendenanordnung angeordnet sind.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei der Herstellung von Bauteilen derartiger elektrischer Maschinen, wie beispielsweise Statoren oder Rotoren, ist es oft erforderlich, Enden von aus Drähten gebildeten Leitern gemeinsam zu verarbeiten, wie z.B. gemeinsam zu schneiden oder zu formen, und miteinander zu verbinden.

Zum Beispiel gibt es Elektromotoren, bei denen Spulenwicklungen, insbesondere des Stators, aus unterschiedlichen Drahtstücken gebildet werden, deren Enden dann miteinander verbunden werden. Es sind bereits Vorrichtungen und Verfahren zum Verbinden von Drahtenden von Hairpins zum Bilden von Statorwicklungen von elektrischen Maschinen vorgeschlagen worden, bei denen die Drahtenden miteinander verschweißt werden. Hierbei sind Vorrichtungen und Verfahren zum Positionieren und Verspannen der Drahtenden vor dem Verschweißen und Vorrichtungen und Verfahren zum Verschweißen der so gespannten Drahtenden vorgesehen.

Ein bevorzugtes Einsatzgebiet der vorliegenden Erfindung liegt auf dem Gebiet der Herstellung von Elektromotoren oder sonstigen elektrischen Maschinen, wie beispielsweise Generatoren, die für hohe Leistungen, zuverlässigen Betrieb und hohe Effizienz ausgelegt sind. Insbesondere sollen Elektromotoren hergestellt werden, die als Fahrmotoren von Elektrofahrzeugen oder Hybridfahrzeugen einsetzbar sind und beispielsweise eine Nennleistung zwischen 20 kW und 400 kW aufweisen. Es ist zum Aufbau von Statoren derartiger leistungsfähiger elektrischer Maschinen vorteilhaft, eine möglichst hohe Spulendichte bereitzustellen.

Für dieses bevorzugte Einsatzgebiet werden in den folgenden Literaturstellen
[1] DE 10 2018 103 926 A1
[2] DE 10 2018 103 929 A1
[3] DE 10 2018 103 930 A1
   auf die für weitere Einzelheiten ausdrücklich verwiesen wird, Vorrichtungen und Verfahren zum Umformen von Drahtenden von Hairpins und ein Herstellverfahren für ein Bauteil einer elektrischen Maschine unter Verwendung derselben beschrieben. Die in den Literaturstellen beschriebenen Vorrichtungen und Verfahren dienen insbesondere zum Umformen der Hairpin-Drahtenden, die miteinander verbunden werden, um so Spulenwicklungen zu bilden. Das Verbinden erfolgt z.B. mittels Schweißens, wozu es vorteilhaft ist, in der Literaturstelle
[4] DE 10 2018 103 100 A1
   auf die für weitere Einzelheiten ausdrücklich verwiesen wird, beschriebene und gezeigte Vorrichtungen und Verfahren zum Positionieren und Spannen der Hairpin-Drahtenden zu verwenden.

Vorrichtungen und Verfahren zur Materialbearbeitung mittels Laserstrahlen sind aus folgenden Literaturstellen bekannt:
[5] US 5 208 699 A
[6] WO 2014/170551 A1
[7] US 2010/0078413 A1
[8] EP 2 886 239 B1
[9] DE 10 2014 002 183 B4

Die Literaturstelle [5] beschreibt eine Vorrichtung zum Liefern hochenergetischer Laserstrahlen. Aus der Literaturstelle [6] ist eine Vorrichtung zum Markieren von Stahlplatten mittels eines Laserstrahls bekannt. Aus der Literaturstelle [7] ist eine Vorrichtung zum Verschweißen eines Deckels an ein Gehäuse einer Sekundärbatterie für ein Fahrzeug bekannt, wobei der Schweißstrahl in nicht gezeigter Weise über die Schweißnahtstelle verfahren wird und wobei das Gehäuse mittels einer Spannvorrichtung mit Spannschuhen gehalten wird, durch die Sperrluft zu der Schweißnahtstelle geleitet werden kann. Aus den Literaturstellen [8] und [9] sind Vorrichtungen zum Laserschweißen eines ersten Werkstücks und eines zweiten Werkstücks an einer Fügestelle bekannt, wobei der Schweißprozess mittels Aufnahme eines Bildes von der Fügestelle und Bildverarbeitung zur Positionserfassung der Fügestelle gesteuert wird.

### Aus der Literaturstelle

EP 3 088 124 A1
sind eine Vorrichtung und ein Verfahren zum Laserschweißen zweier benachbarter Leiterenden einer Statorwindung einer elektrischen Maschine als Fahrmotor für ein Fahrzeug bekannt. Dabei werden die beiden Leiterenden zusammengespannt, dann wird die Position der Fügestelle mittels Aufnahme eines Bildes und Bildverarbeitung erfasst, und es erfolgt ein Schweißen mittels zweier die Fügestelle kreuzender Schweißlinien.

Nun sind Bauteile derartig leistungsfähiger elektrischer Maschinen relativ groß, und es müssen entsprechend der gewünschten hohen Energiedichte eine große Anzahl von Spulenwicklungen hergestellt werden, wozu eine große Anzahl von Leiterenden, die aus einem relativ großen Bauteil hervorstehen, miteinander verbunden werden müssen.

Die Erfindung hat sich zur Aufgabe gestellt, eine Vorrichtung und ein Verfahren zur Verfügung zu stellen, mit denen Leiterenden, die auch an einem größeren in Großserie zu fertigenden Bauteil einer elektrischen Maschine in einer komplexen Leiterendenanordnung vorstehen, mit geringerem Aufwand schnell und dennoch prozesssicher verschweißt werden können.

Zum Lösen dieser Aufgabe schafft die Erfindung eine Vorrichtung und ein Verfahren gemäß den unabhängigen Ansprüchen.

Vorteilhafte Ausgestaltungen sind Gegenstand der Unteransprüche.

Die Erfindung schafft gemäß einem Aspekt davon eine Vorrichtung zum Verschweißen von Leiterenden, die an einem Bauteil einer elektrischen Maschine in einer Leiterendenanordnung angeordnet sind, umfassend:
eine Beleuchtungseinrichtung zum Beleuchten der Leiterendenanordnung,
eine optische Erkennungseinrichtung zum Erkennen der Position der beleuchteten Leiterenden, wobei die optische Erkennungseinrichtung dazu ausgebildet ist, ein oder mehrere Bilder zumindest eines Teilbereichs der Leiterendenanordnung mit mehreren zu verschweißenden Gruppen von Leiterenden aufzunehmen und durch Bildverarbeitung die Positionen der mehreren Gruppen von Leiterenden zu erfassen,
eine Lasereinrichtung, die einen Laserstrahl abhängig von der erkannten Position auf jede miteinander zu verschweißende Gruppe von Leiterenden zumindest des Teilbereichs der Leiterendenanordnung leiten kann, und
eine Halterung, mittels der das Bauteil beim Schweißvorgang zum Schweißen aller Gruppen von Leiterenden zumindest des Teilbereichs der Leiterendenanordnung stationär zu der Lasereinrichtung gehalten wird.

Beispielsweise werden sowohl die Halterung als auch die Lasereinrichtung während des Verschweißens aller Gruppen von Leiterenden des gesamten Teilbereichs stationär gehalten.

Es ist bevorzugt, dass die Beleuchtungseinrichtung eine Flächenleuchte zum Ausleuchten der gesamten Leiterendenanordnung aufweist. Alternativ kann die Beleuchtungseinrichtung so ausgebildet sein, dass der Teilbereich beleuchtet wird.

Der Teilbereich ist vorzugsweise so bemessen, dass eine Vielzahl der zu verschweißenden Gruppen abgedeckt ist, z.B. zumindest die Hälfte, ein Drittel, ein Viertel oder ein Fünftel aller zu verschweißender Gruppen von Leiterenden der Leiterendenanordnung. Zum Beispiel umfasst der Teilbereich wenigstens vier zu verschweißende Gruppen von Leiterenden (zum Beispiel Pinpaare). Insbesondere umfasst der Teilbereich wenigstens acht zu verschweißende Gruppen von Leiterenden. Vorzugsweise umfasst der Teilbereich wenigstens zehn, mehr insbesondere 10 bis 40 zu verschweißende Gruppen von Leiterenden. Beispielsweise umfasst der Teilbereich 15 bis 25 oder bis 30 zu verschweißende Gruppen von Leiterenden.

Es ist bevorzugt, dass die Beleuchtungseinrichtung eine Anordnung von Einzellichtquellen aufweist.

Es ist bevorzugt, dass die Beleuchtungseinrichtung eine Anordnung von Einzelbohrungen zum Bilden von Einzellichtquellen aufweist.

Es ist bevorzugt, dass die Beleuchtungseinrichtung eine gleichmäßige Verteilung von Einzellichtquellen aufweist.

Es ist bevorzugt, dass die Beleuchtungseinrichtung eine Lichtleiteinrichtung zum gleichmäßigen Verteilen von Lichtleistung auf Einzellichtquellen aufweist.

Es ist bevorzugt, dass die Beleuchtungseinrichtung eine Ausleuchtoptik aufweist, mittels der die gesamte Leiterendenanordnung ausleuchtbar ist.

Es ist bei einer Ausgestaltung vorgesehen, dass die Lasereinrichtung stationär ist. Gemäß einem weiteren Ausführungsbeispiel ist vorgesehen, dass die Lasereinrichtung dazu ausgebildet ist, zwischen den Vorgängen zum Verschweißen von Teilbereichen der Leiterendenanordnung verfahren zu werden. Gegebenenfalls kann die Beleuchtungseinrichtung mit verfahren werden, beispielsweise sitzt sie an einem zu verfahrenden Kopf der Lasereinrichtung.

Es ist bevorzugt, dass die Lasereinrichtung eine Laseroptik mit einem Laserstrahleingang zum Einstrahlen eines Laserstrahls, einer Scaneinrichtung zum Lenken des Laserstrahls und wenigstens einer Linse zur Strahlbeeinflussung des Laserstrahls ist oder aufweist. Die Laseroptik ist bei einer Ausgestaltung relativ zu der Halterung stationär, nur Spiegel oder sonstige Ablenkelemente der Scaneinrichtung sind beweglich, um den Laserstrahl auf jeden Punkt in einem relativ großen Bearbeitungsbereich, der die gesamte Leiterendenanordnung einschließt, leiten zu können. Bei einer anderen Ausgestaltung ist die Laseroptik zwar relativ zu der Halterung beweglich, jedoch derart ausgebildet - insbesondere durch eine entsprechend ausgebildete Steuerung - dass sie zum Verschweißen aller Gruppen von Leiterenden eines jeden Teilbereichs der Leiterendenanordnung stationär gehalten wird - wobei nur die Spiegel oder die sonstige Ablenkelemente den Laserstrahl lenken -, jedoch zum Bearbeiten unterschiedlicher Teilbereiche relativ zu der Halterung verfahrbar ist.

Es ist bevorzugt, dass die Lasereinrichtung ein Ablenken des Laserstrahls über einen Bearbeitungsbereich an der Leiterendenanordnung mit einem Durchmesser von 300 mm oder mehr ermöglicht. Selbstverständlich können auch Bauteile mit einem Durchmesser kleiner als 300 mm bearbeitet werden.

Es ist bevorzugt, dass die Lasereinrichtung eine Laserstrahlquelle mit einem Leistungsbereich zwischen 1 und 8 kW, vorzugsweise zwischen 3 bis 6 kW und mehr bevorzugt zwischen 4 und 6 kW aufweist.

Es ist bevorzugt, dass die Lasereinrichtung zum Erreichen eines Laserstrahl mit Strahldurchmesser im Fokus zwischen 50 µm und 200 µm, vorzugsweise 100 µm und 200 µm ausgebildet ist.

Es ist bevorzugt, dass die Lasereinrichtung derart ausgebildet ist, dass mittels Einstellung des Strahldurchmessers an der Leiterendenanordnung eine Laserstrahlung mit Intensität I mit vorzugsweise l>10⁶ W/cm² erreicht wird.

Es ist bevorzugt, dass die Lasereinrichtung ein Lichtleitkabel zum Führen des Laserstrahls hin zu der Scaneinrichtung aufweist.

Es ist bevorzugt, dass die Lasereinrichtung ein in Strahlrichtung vor der Scaneinrichtung angeordnetes Lichtleitkabel mit einem Faserkerndurchmesser von 50 µm bis 300 µm, bevorzugt 50 µm bis 150 µm aufweist.

Vorzugsweise weist die Vorrichtung eine Strömungserzeugungseinrichtung zum Erzeugen einer Gasströmung über die Leiterendenanordnung auf.

Vorzugsweise weist die Vorrichtung mehrere Düsen zum Erzeugen einer zumindest teilweise in tangentialer Richtung gerichteten Gasströmung an der Leiterendenanordnung auf.

Es ist bevorzugt, dass eine stationäre Schweißschablone mit Öffnungen vorgesehen ist, in denen die zu verschweißenden Leiterenden der Leiterendenanordnung aufzunehmen sind.

Eine bevorzugte Ausgestaltung der Vorrichtung umfasst eine erste und eine zweite Schweißstation, die durch eine gemeinsame Laserstrahlquelle mit Laserleistung versorgt werden.

Gemäß einem weiteren Aspekt schafft die Erfindung eine Schweißanordnung, umfassend eine Vorrichtung nach einer der voranstehenden Ausgestaltungen und das Bauteil.

Gemäß einem weiteren Aspekt schafft die Erfindung ein Verfahren zum Verschweißen von Leiterenden, die an einem Bauteil einer elektrischen Maschine in einer Leiterendenanordnung angeordnet sind, umfassend:
a) Ausleuchten der zumindest eines Teilbereichs der gesamten Leiterendenanordnung,
b) optisches Erkennen der Position der Leiterenden der ausgeleuchteten Leiterendenanordnung durch Aufnahme wenigstens eines Bildes zumindest des Teilbereichs der Leiterendenanordnung und Durchführen einer Bildverarbeitung, um die Position jeder Gruppe von zu verschweißenden Leiterenden innerhalb des Teilbereichs der Leiterendenanordnung zu erfassen,
c) Ablenken eines Laserstrahls abhängig von der erkannten Position auf jede miteinander zu verschweißende Gruppe von Leiterenden zumindest für den Teilbereich der gesamten Leiterendenanordnung, um so die Gruppen von Leiterenden zu verschweißen,
d) wobei das Bauteil beim Schweißvorgang gemäß Schritt c) relativ zu der den Laserstrahl liefernden Lasereinrichtung stationär gehalten wird.

Bei kleineren Statoren oder sonstigen Bauteilen wird zum Beispiel durch die gesamte Leiterendenanordnung in einem oder mehreren Bildern aufgenommen und mit relativ zu der Halterung stationär gehaltener Lasereinrichtung verschweißt. Bei besonders großen Bauteilen ist bevorzugt, die Leiterendenanordnung in zwei, drei, vier, fünf oder sechs Teilbereiche aufzuteilen und den Vorgang an jedem Teilbereich mit relativ zu der Halterung stationär gehaltener Lasereinrichtung durchzuführen. Jeder Teilbereich enthält aber eine Vielzahl von Gruppen von zu verschweißenden Leiterenden, z.B. mindestens 10 Leiterendenpaare. Somit lässt sich durch einen einzelnen Berechnungsvorgang bei der Bildverarbeitung die Position von zumindest 10 Leiterendenpaaren gleichzeitig bestimmen. Zum Beispiel umfasst der Teilbereich wenigstens vier zu verschweißende Gruppen von Leiterenden (zum Beispiel Pinpaare). Insbesondere umfasst der Teilbereich wenigstens acht zu verschweißende Gruppen von Leiterenden. Vorzugsweise umfasst der Teilbereich wenigstens zehn, mehr insbesondere 10 bis 40 zu verschweißende Gruppen von Leiterenden. Beispielsweise umfasst der Teilbereich 15 bis 25 oder bis 30 zu verschweißende Gruppen von Leiterenden.

Es ist bevorzugt, dass Schritt a) den Schritt umfasst:
a1) Ausleuchten der Leiterendenanordnung mit einer über die gesamte Bearbeitungsfläche, die die Leiterendenanordnung einschließt, konstanten Lichtcharakteristik.

Es ist bevorzugt, dass Schritt a) den Schritt umfasst:
a2) Leiten von Licht zur Lichtemission zwecks Ausleuchtens mittels Lichtleiter.

Es ist bevorzugt, dass Schritt a) den Schritt umfasst:
a3) Ausleuchten mittels einer gleichmäßigen Anordnung von Einzellichtquellen.

Es ist bevorzugt, dass Schritt a) den Schritt umfasst:
a4) Emittieren des Lichts durch eine Anordnung von Bohrungen als Einzellichtquellen.

Es ist bevorzugt, dass Schritt a) den Schritt umfasst:
a5) Leiten und Beeinflussen des Lichts zum Ausleuchten durch wenigstens eine Ausleuchtoptik.

Es ist bevorzugt, dass Schritt b) den Schritt umfasst:
b1) Erkennen der Lage von zu verschweißenden Leiterenden mittels bildgebender Verfahren.

Es ist bevorzugt, dass Schritt b) den Schritt umfasst:
b2) Aufnahme wenigstens eines Bildes wenigstens eines Ausschnitts der die Leiterendenanordnung einschließenden Bearbeitungsfläche.

Bei einer möglichen Ausgestaltung ist vorgesehen, dass Schritt b) den Schritt umfasst:
b3) Aufnahme wenigstens eines Bildes der gesamten Leiterendenanordnung.

Es ist bevorzugt, dass Schritt b) den Schritt umfasst:
b4) Erkennen von Kanten von Leiterenden in einem aufgenommenen Bild und Berechnen der Position einer Mitte einer Gruppe zu verschweißender Leiterenden anhand der erfassten Kanten.

Es ist bevorzugt, dass Schritt b) den Schritt umfasst:
b5) Erkennen unterschiedlich gerichteter Kanten von Leiterenden in einem aufgenommenen Bild, um eine Position einer Gruppe zu verschweißender Leiterenden zu erfassen.

Es ist bevorzugt, dass Schritt b) den Schritt umfasst:
b6) Aufnahme wenigstens eines Bildes durch eine in oder an einer stationären Laseroptik, die eine Scaneinrichtung zum Durchführen von Schritt c) enthält, angeordnete Kamera.

Es ist bevorzugt, dass Schritt c) den Schritt umfasst:
c1) Leiten von Laserlicht mit einer Leistung von 1 bis 8 kW, vorzugsweise 3 bis 6 KW, besonders bevorzugt 4 bis 6 kW zu einer Scaneinrichtung.

Es ist bevorzugt, dass Schritt c) den Schritt umfasst:
c2) Leiten von Laserlicht zu einer Scaneinrichtung mittels einer Lichtleitfaser mit einem Faserkerndurchmesser von 50 µm bis 300 µm, bevorzugt 50 µm bis 150 µm.

Es ist bevorzugt, dass Schritt c) den Schritt umfasst:
c3) Einstellen eines Strahldurchmessers von 100 µm bis 200 µm an der Schweißstelle auf der zu verschweißenden Gruppe von Leiterenden.

Es ist bevorzugt, dass Schritt c) den Schritt umfasst:
c4) Einstellen eines Strahldurchmessers auf der Schweißstelle auf der zu verschweißenden Gruppe von Leiterenden derart, dass eine Strahlintensität von vorzugsweise mehr als 10⁶ W/cm² erreicht wird.

Es ist bevorzugt, dass Schritt c) den Schritt umfasst:
c5) Durchführen des Schweißprozesses mit Geschwindigkeiten von 200 bis 1000 mm/s, vorzugsweise 600-1000 mm/s, bevorzugt 800 mm/s bis 1000 mm/s.

Es ist bevorzugt, dass Schritt c) den Schritt umfasst:
c6) Scannen des Laserstrahls über einen Bearbeitungsbereich an der Leiterendenanordnung, wobei der Bearbeitungsbereich einen Durchmesser von 300 mm oder mehr hat. Es ist bevorzugt, dass damit Bauteile mit einem Durchmesser von 300 mm oder mehr ohne Relativbewegung von Bauteil und Laseroptik bearbeitet werden.

Selbstverständlich können aber auch Bauteile, z.B. Statoren, mit einem Durchmesser kleiner als 300 mm bearbeitet werden. Da die Leiterenden in der Leiterendenanordnung insgesamt optisch erfasst werden, muss zur Bearbeitung kleinerer Bauteile auch keine Änderung an einer das Verfahren implementierenden Vorrichtung oder deren Steuerung oder deren Steuerungssoftware vorgenommen werden; es wird dann nur ein Teil des Bearbeitungsbereichs ausgenutzt.

Es ist bevorzugt, dass Schritt d) den Schritt umfasst:
d1) stationäres Halten des Bauteils.

Es ist bevorzugt, dass Schritt d) den Schritt umfasst:
d2) Anordnen der Leiterendenanordnung in einer stationären Schweißschablone.

Bei einer Ausführungsform ist vorgesehen, dass Schritt d) den Schritt umfasst:
d3) Verwenden einer stationären Lasereinrichtung, die die Scaneinrichtung und wenigstens eine Linse enthält.

Bei einer anderen Ausführungsform wird eine verfahrbare Lasereinrichtung verwendet. Die Lasereinrichtung wird hierzu zur Positionserfassung und zum Verschweißen aller Gruppen von Leiterenden (z.B. mindestens 10 Gruppen von zu verschweißenden Leiterenden) eines jeden Teilbereichs der Leiterendenanordnung relativ zu der Halterung stationär gehalten und nur zum Wechseln von einem Teilbereich zum nächsten relativ zu der Halterung verfahren.

Vorzugsweise umfasst das Verfahren den Schritt:
e) Erzeugen einer Gasströmung über die Leiterendenanordnung während des Schweißens.

Vorzugsweise umfasst das Verfahren den Schritt:
e1) Erzeugen von mehreren zumindest teilweise in tangentialer Richtung gerichteter Einzelgasströme zum Erzeugen einer umlaufenden Gasströmung über der Leiterendenanordnung während des Schweißens.
e2) Erzeugen einer radial gerichteten Gasströmung über die Leiterendenanordnung.

Vorzugsweise wird das Verfahren gemäß einer der voranstehenden Ausgestaltungen an einer ersten Schweißstation und an einer zweiten Schweißstation unter Nutzung desselben Lasers zum Erzeugen der Laserstrahlung durchgeführt.

Weiter vorzugsweise laufen dabei die Schritte a) und b) an einer der Schweißstationen wechselweise mit dem Schritt c) an der anderen Schweißstation gleichzeitig ab.

Vorzugsweise ist die Vorrichtung nach einer der voranstehenden Ausgestaltungen zum Durchführen des Verfahrens nach einer der voranstehenden Ausgestaltungen ausgebildet. Vorzugsweise wird das Verfahren nach einer der voranstehenden Ausgestaltungen auf einer Vorrichtung nach einer der voranstehenden Ausgestaltungen durchgeführt.

Bevorzugte Ausgestaltungen der Vorrichtung umfassen eine - z.B. entsprechend programmierte - Steuerung, die ausgebildet ist, die Vorrichtung gemäß einer der voranstehenden Ausgestaltungen zum Durchführen des Verfahrens gemäß einer der voranstehenden Ausgestaltungen anzusteuern.

Ein weiterer Aspekt der Erfindung schafft ein Computerprogrammprodukt umfassend maschinenlesbare Steueranweisungen, die, wenn in eine Steuerung einer Vorrichtung nach einer der voranstehenden Ausgestaltungen geladen, die Vorrichtung dazu veranlassen, das Verfahren gemäß einer der voranstehenden Ausgestaltungen durchzuführen.

Gegenstand der Erfindung sind eine Vorrichtung und ein Verfahren zum Schweißen von Leiterenden. Mehr insbesondere betrifft die Erfindung eine Vorrichtung und ein Verfahren zum Schweißen von Hairpins.

Insbesondere betrifft die Erfindung ein Schweißen ohne Manipulation, insbesondere des Bauteils und/oder der Lasereinheit.

Mehr insbesondere werden eine Vorrichtung und ein Verfahren vorgeschlagen, mit denen Leiterenden an einem Bauteil einer elektrischen Maschine, auch bei größeren Bauteilen, z.B. Statoren mit großem Durchmesser, und/oder auch bei einer größeren Anzahl von zu verschweißenden Leiterenden geschweißt werden können, ohne dass die Schweißeinheit und/oder das Bauteil bewegt werden müssen. Bevorzugtes Einsatzgebiet der Erfindung ist die Elektromobilität und mehr insbesondere die Herstellung von Bauteilen elektrischer Maschinen, die als Fahrantriebe von Kraftfahrzeugen einsetzbar sind. Insbesondere soll die Erfindung in der Großserienproduktion solcher Bauteile eingesetzt werden. Eine Ausgestaltung der Erfindung betrifft somit auch eine Anlage zur Herstellung eines Bauteils einer elektrischen Maschine in Großserie, umfassend eine Vorrichtung nach einer der voranstehenden Ausgestaltungen.

Die Kontaktierung von elektrisch zu verschaltenden Kupferdrähten oder ähnlicher Leiterenden erfolgt derzeit meist über stoffschlüssige Verbindungen, die mit unterschiedlichen Schweißverfahren realisiert werden können. Hierfür sind im Stand der Technik neben div. Strahlschweißverfahren wie dem Laserstrahl- oder Elektronenstrahlschweißen auch lichtbogenbasierte Verfahren, wie WIG und Plasmaschweißen etabliert.

Bei bevorzugten Verwendungen des Verfahrens und der Vorrichtung gemäß Ausführungsbeispielen der Erfindung werden die zu kontaktierenden Pins im Parallelstoß stirnseitig an deren freien Enden verschweißt, wobei die Geometrie der Schweißverbindung eine perlen- bzw. halbkugelförmige Kontur ausbildet. In Abhängigkeit der erforderlichen mechanischen und elektrischen Eigenschaften wird weiter vorzugsweise der Anbindungsquerschnitt über das Schmelzevolumen bzw. die Perlenhöhe individuell eingestellt. Beim Schweißprozess erfolgt eine flächige Energieeinbringung, vorzugsweise derart, dass die Stirnfläche vollständig aufgeschmolzen wird und eine geschlossene Schmelzedecke resultiert. Im Detail wird bei bevorzugten Ausgestaltungen die Energie entlang einer charakteristischen Schweißkontur eingebracht, deren Geometrie und Dimension in Abhängigkeit des Drahtquerschnittes gewählt wird. Die Dimension dieser Konturen erstreckt sich über den gesamten Querschnitt des Pinpaares, sodass eine konstante und gleichmäßige Schmelzedecke entsteht. In Abhängigkeit des erforderlichen Anbindungsquerschnittes ist ein charakteristisches Schmelzevolumen erwünscht. Vorzugsweise erfolgt hierzu eine Mehrfachüberfahrt der Schweißkontur, sodass eine charakteristische Anzahl an Bestrahlungswechsel zwischen den Pins resultiert.

Statoren für Fahrmotoren von Fahrzeugen haben relativ große Dimensionen. Andererseits ist der Bearbeitungsbereich derzeitiger Laserschweißeinheiten aufgrund unterschiedlicher Faktoren beschränkt. Daher musste bisher das Bauteil durch den Bearbeitungsbereich bewegt werden, z.B. durch Drehen des Bauteils mit den eingespannten Leiterenden um eine zentrale Achse des Bauteils oder durch Bewegen der Laseroptik, um das Schweißen der Pinpaare nacheinander durchzuführen.

Bevorzugte Ausgestaltungen der Erfindung ermöglichen ein Laserstrahlschweißen eines Stators ohne örtliche Manipulation, sprich Rotation des Stators und/oder Bewegung der Laseroptik. Bevorzugte Ausgestaltungen der Erfindung ermöglichen eine vollumfängliche Ausleuchtung des Stators im stationären Fall, sodass eine geeignete Beleuchtungssituation für die Erkennung der Pins über Visionssysteme möglich ist. Bei Ausgestaltungen der Erfindung zur Bearbeitung besonders großer Statoren oder dergleichen wird die Leiterendenanordnung in wenige Teilbereiche, die jeweils eine Vielzahl der zu verschweißenden Pins aufweisen, aufgeteilt, und das Verschweißen der Pins des gesamten Teilbereichs erfolgt stationär, so dass eine Bewegung nur zwischen den wenigen Teilbereichen durchzuführen ist. Auch hierdurch lassen sich Berechnungszeiten und Prozesszeiten erheblich verringern.

Die in bisherigen Lösungsansätzen vorgesehenen optischen Konfigurationen der Schweißoptik beinhalten Brennweiten / Arbeitsabstände, woraus Scanfeldgrößen resultieren, die ausschließlich das Schweißen der Leiterenden ermöglicht, die von einzelnen Nuten des Stators hervorstehen. Demnach ist eine zeitintensive Rotation des Stators oder Bewegung der Optik erforderlich, um die zu verschweißenden Nuten sukzessive in das Arbeitsfeld der Laseroptik zu bewegen. Damit einhergehend resultieren Nachteile in Bezug auf die Taktzeit und somit den Output.

Die konventionell verfügbaren Leuchtmittel, basierend auf LED-Technik, ermöglichen in diesem Zusammenhang ausschließlich eine lokal beschränkte Ausleuchtung des Stators. Im Detail wird hierbei ausschließlich der Bereich des Scanfeldes relativ zur Statorposition ausgeleuchtet.

Bislang erfolgte die Erfassung der Pinposition pinweise, sprich jedes Pinpaar wird in einem Einzelbild erfasst, sodass hohe Erfassungs- und Rechenzeiten resultieren.

Vorteilhafte Ausgestaltungen der Erfindung ermöglichen ein Erfassen der gesamten Leiterendenanordnung oder eines großen Teilbereichs der Leiterendenanordnung und eine Bildverarbeitung an dem Gesamtbild der gesamten Leiterendenanordnung oder zumindest des Teilbereichs derselben. Vorzugsweise wird eine vollständige Ausleuchtung der Leiterendenanordnung geschaffen. Die Leiterendenanordnung kann insgesamt erfasst werden, darin kann die Position der einzelnen zu schweißenden Pins erfasst werden. Somit lassen sich Erfassungs- und Rechenzeiten reduzieren. Bei bevorzugten Ausgestaltungen wird dies insbesondere durch eine Kombination geeigneter Brennweiten / Arbeitsbereiche der Laseroptik mit entsprechender Beleuchtungstechnik erreicht. Vorzugsweise werden höhere Arbeitsabstände als bisher vorgesehen. Die hohen Arbeitsabstände ermöglichen große Scanfelder / Arbeitsfelder der Optik, die den gesamten Stator oder große Teilbereiche, z.B. zumindest die Hälfte oder ein Drittel oder ein Viertel, abdecken, sodass weder der Stator noch die Optik für ein vollumfängliches Schweißen aller Pins des gesamten Stators oder des Teilbereichs bewegt werden müssen. Dies ermöglicht den Einsatz einer stationären Schweißschablone, die weder rotatorische noch translatorische Freiheitsgrade besitzt. Gegebenenfalls ist nur ein Bewegungsapparat für die Laseroptik vorzusehen, der diese nur für einen Wechsel zwischen den Teilbereichen bewegt.

Des Weiteren ermöglicht der Einsatz einer Flächenleuchte eine stationäre Ausleuchtung der Pinpaare, sodass ein schattenfreies Beleuchtungsergebnis resultiert. Damit werden alle Pins des Stators gleichzeitig ausgeleuchtet, sodass geeignete Randbedingungen für eine Bilderfassung resultieren.

Softwaretechnische Erweiterungen ermöglichen eine Mehrfacherfassung von Pinpaaren, die bis zu einer segmentweisen Erfassung erweitert werden kann. Dies ermöglicht eine Reduktion der Taktzeit und stellt somit einen prozesstechnischen Vorteil dar.

Ausführungsbeispiele der Erfindung werden im Folgenden anhand der beigefügten Zeichnungen näher erläutert. Darin zeigt:
- Fig. 1: eine Seitenansicht einer Schweißanordnung gemäß einem Vergleichsbeispiel eines vorherigen Lösungsansatzes, umfassend eine Vorrichtung zum Verschweißen von Leiterenden gemäß dem Vergleichsbeispiel und ein Bauteil in Form eines Stators;
- Fig. 2: eine Draufsicht auf das in einer Halterung gehaltene Bauteil des Vergleichsbeispiels von Fig. 1;
- Fig. 3: eine schematische Skizze der Halterung des Vergleichsbeispiels;
- Fig. 4: eine Seitenansicht einer Schweißanordnung gemäß einem Ausführungsbeispiel der Erfindung, umfassend eine Vorrichtung zum Verschweißen von Leiterenden gemäß einer Ausführungsform der Erfindung und ein Bauteil in Form eines Stators;
- Fig. 5: eine Draufsicht auf das in einer Halterung gehaltene Bauteil des Ausführungsbeispiels von Fig. 4;
- Fig. 6: eine Detailansicht einer Ausführungsform der Halterung des Ausführungsbeispiels von Fig. 4;
- Fig. 7: eine Detailansicht einer weiteren Ausführungsform der Halterung des Ausführungsbeispiels von Fig. 4;
- Fig. 8: ein Detail einer Strömungserzeugungseinrichtung der Halterung gemäß den Fig. 6 und 7 zur Darstellung ihrer Funktion während des Schweißvorganges;
- Fig. 9: eine Detailansicht einer Ausführungsform einer Lasereinrichtung der Vorrichtung der Schweißanordnung gemäß dem Ausführungsbeispiel von Fig. 4; und
- Fig. 10: eine vereinfachte Blockdarstellung der Vorrichtung zum Verschweißen von Leiterenden gemäß einer Ausführungsform der Erfindung, die eine erste und eine zweite Schweißstation umfasst.

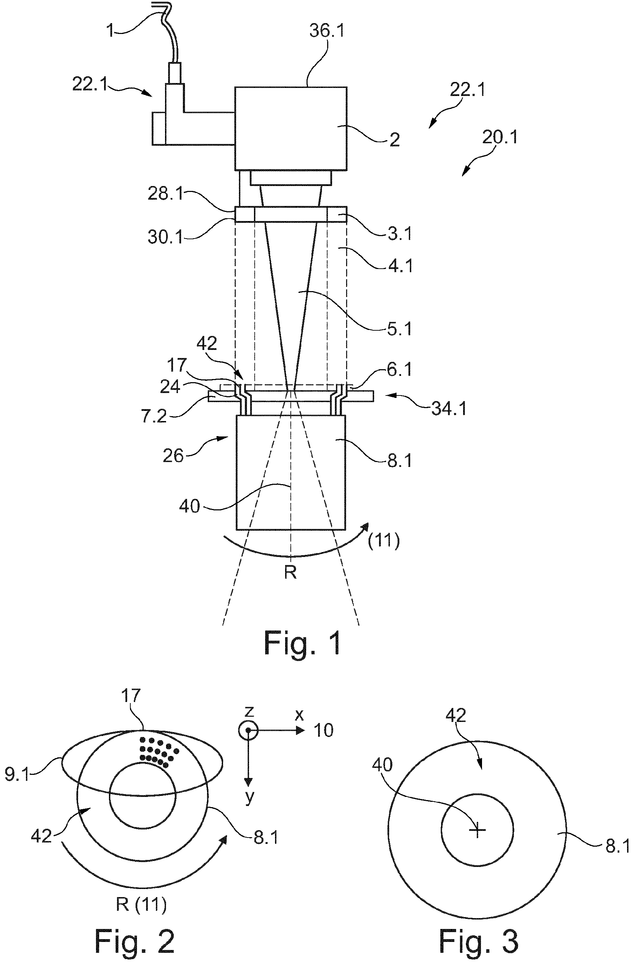

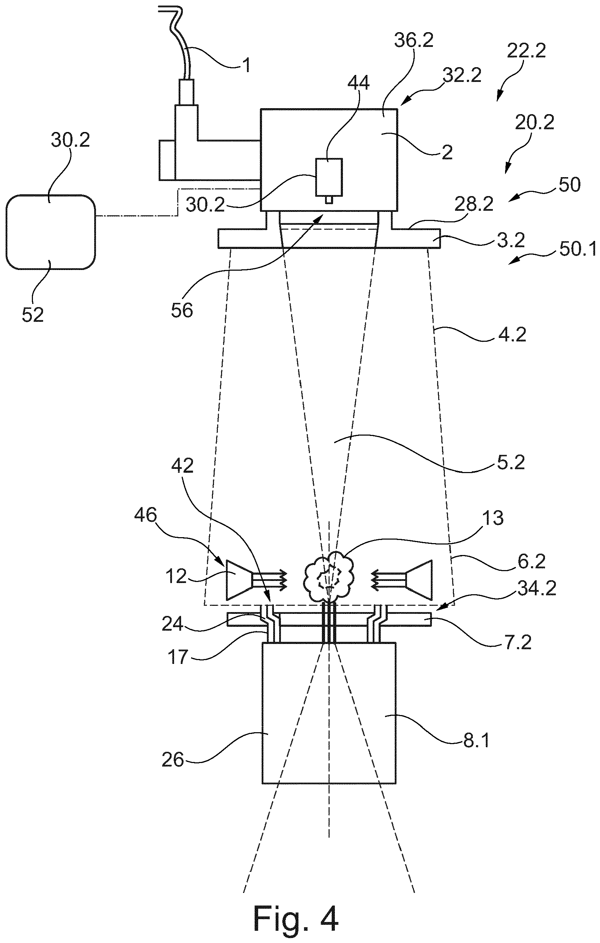

In den Figuren 1 und 4 sind unterschiedliche Schweißanordnungen 20.1, 20.2 dargestellt. Die Figur 1 zeigt eine Schweißanordnung 20.1 gemäß einem Vergleichsbeispiel eines vorherigen Lösungsansatzes, und die Figur 4 zeigt eine Schweißanordnung 20.2 gemäß einem ersten Ausführungsbeispiel der Erfindung. Im Folgenden werden zunächst die Gemeinsamkeiten der Schweißanordnungen 20.1, 20.2 beschrieben, wobei einander entsprechende Komponenten mit gleichem Bezugszeichen versehen sind.

Die Schweißanordnung 20.1, 20.2 umfasst jeweils eine Vorrichtung 22.1, 22.2 zum Verschweißen von Leiterenden 24, die aus einem Bauteil 26 vorstehen, sowie das zu bearbeitende Bauteil 26.

Bei einem bevorzugten Ausführungsbeispiel ist das Bauteil 26 ein Stator 8.1 eines als Fahrmotor für Kraftfahrzeuge zu verwendenden Elektromotors. Der Stator 8.1 wird gemäß einem Herstellverfahren, wie es im Einzelnen in den Literaturstellen [1] - [4] beschrieben und gezeigt ist, hergestellt. Die hier beschriebenen Vorrichtungen 22.1, 22.2 dienen zum Durchführen des in diesen Literaturstellen beschriebenen Schweißvorganges zum Verbinden von Leiterenden 24, die aus dem Stator 8.1 vorstehen, um so Spulenwicklungen des Stators zu bilden. Die Leiterenden 24 sind insbesondere die freien Enden von Hairpins 17, welche in Nuten eines Gehäuses des Stators 8.1 eingeführt worden sind. Entsprechend werden die Leiterenden 24 auch als Pins bezeichnet, ein Paar von miteinander zu verschweißenden Leiterenden 24 wird auch als Pinpaar bezeichnet.

Die Vorrichtung 22.1, 22.2 weist eine Beleuchtungseinrichtung 28.1, 28.2, eine optische Erkennungseinrichtung 30.1, 30.2, eine Lasereinrichtung 32.1, 32.2 und eine Halterung 34.1, 34.2 auf.

Die Beleuchtungseinrichtung 28.1, 28.2 dient zum Beleuchten von Leiterenden 24.

Die optische Erkennungseinrichtung 30.1, 30.2 ist dazu ausgebildet, durch die Beleuchtungseinrichtung 28.1, 28.2 beleuchtete Leiterenden 24 zu erkennen und deren Position in einem Koordinatensystem 10 zu erfassen.

Die Lasereinrichtung 32.1, 32.2 ist dazu ausgebildet, einen Laserstrahl 5.1, 5.2 abhängig von der erfassten Position auf die Leiterenden 24 zu richten, um so das Verschweißen der Leiterenden durchzuführen. Zum Lenken des Laserstrahls 5.1, 5.2 weist die Lasereinrichtung 32.1, 32.2 eine Scaneinrichtung 36.1, 36.2 auf.

Die Halterung 34.1, 34.2 dient zum Halten des Bauteils 26 und der Leiterenden 24 während des Schweißvorganges. Hierzu weist die Halterung 34.1, 34.2 als Schweißschablone eine Spannvorrichtung 7.2 auf, die so ausgebildet sein kann, wie dies näher in der Literaturstelle [4] beschrieben und gezeigt ist.

Im Folgenden werden anhand der Figuren 1 - 3 die Schweißanordnung 20.1 gemäß dem Vergleichsbeispiel nach einem früheren Lösungsansatz sowie deren Komponenten 22.1, 28.1, 30.1, 32.1 und 34.1 näher beschrieben. Die Lasereinrichtung 32.1 ist zum Auferlegen eines möglichst hohen Anteiles der Laserenergie auf die zu verschweißenden Leiterenden 24 optimiert und weist somit einen relativ geringen Arbeitsabstand von weniger als 300 mm auf. Die Scaneinrichtung 36.1 hat ein Scanfeld 9.1 und somit einen Bearbeitungsbereich, innerhalb dem der Laserstrahl 5.1 geleitet werden kann, welches die radiale Erstreckung einer Nut des Ringgehäuses des Stators 8.1 abdeckt. Die Halterung 34.1 weist einen Drehmechanismus zum Drehen der Spannvorrichtung 7.2 und des daran gehaltenen Stators 8.1 um eine zentrale Achse 40 auf. Durch die Drehung lässt sich der gesamte Umfang des Ringgehäuses durch das Bearbeitungsfeld 9.1 der Scaneinrichtung 36.1 drehen.

Aufgrund großer Dimensionen des Stators 8.1, die teilweise den Bearbeitungsbereich 9.1 der Laseroptik 2 der Lasereinrichtung 32.1 überschreiten, wird der Stator 8.1 über eine C-Achse - zentrale Achse 40 - rotiert, um die zu verschweißenden Pinpaare der Hairpins 17 in den Bearbeitungsbereich 9.1 zu bewegen. Die Rotationsrichtung 11 ist in Fig. 1 und 2 angedeutet.

Bei einem alternativen Lösungsansatz gemäß einem weiteren, hier nicht näher dargestellten Vergleichsbeispiel kann dies über eine translatorische Bewegung der Laseroptik 2 der Lasereinrichtung 32.1 abgebildet werden.

Für die Laseroptik 2 der Lasereinrichtung 32.1 sind hierfür Fokussierbrennweiten / Arbeitsabstände von 255 mm bzw. 294 mm vorgesehen. Für diese Brennweite resultiert ein Scanfeld - Bearbeitungsbereich 9.1 der Lasereinrichtung 32.1 -, das ca. fünf bis zehn Nuten mit den daraus hervorstehenden Leiterenden 24 abdeckt (typabhängig), sodass der Stator 8.1 nicht ohne Manipulation vollumfänglich verschweißt werden kann. Entsprechend der genannten Dimensionen des Scanfeldes ist die Beleuchtungseinrichtung 28.1 derart konfiguriert, sodass ein vergleichbarer Arbeitsbereich ausleuchtet wird. Hierzu weist die Beleuchtungseinrichtung 28.1 ein Ringlicht 3.1 auf. Der resultierende Lichtkegel 4.1 des Ringlichts 3.2 ist in Fig. 1 dargestellt. Zugleich erfordert die beschriebene Schweißstrategie eine rotierende Schweißschablone. Entsprechend ist es schwierig, einen Luftvorhang 6.1 auszubilden, um beim Schweißen entstehende Partikel abzuhalten.

Im Folgenden werden die Schweißanordnung 20.2 gemäß dem ersten Ausführungsbeispiel der Erfindung sowie Ausführungsbeispiele von deren Komponenten 22.2, 28.2, 30.2, 32.2, 34.2 und 36.2 anhand der Darstellung in den Figuren 4 - 8 näher erläutert.

Die Beleuchtungseinrichtung 28.1 ist dazu ausgebildet, die gesamte Leiterendenanordnung 42 aller aus dem Bauteil 26 hervorstehenden Leiterenden 24 insgesamt zu beleuchten. Hierzu weist die Beleuchtungseinrichtung 28.2 eine Flächenleuchte bzw. ein Flächenlicht 3.2 auf. Während der Lichtkegel 4.1 des Ringlichtes 3.1 in Figur 1 sehr eingeschränkt nur einen Teil der Leiterenden beleuchtet, beleuchtet Lichtkegel 4.2 des Flächenlichts 3.2 alle Leiterenden 24 der gesamten Leiterendenanordnung 42. Das Flächenlicht 3.2 ist so ausgebildet, dass über die gesamte Leiterendenanordnung 42 eine gleichmäßige Beleuchtung erfolgt und somit eine gleichbleibende Lichtcharakteristik herrscht.

Die optische Erkennungseinrichtung 30.2 ist demnach dazu ausgebildet, mit einer Kamera 44, die sich im Bereich der Laseroptik 2 befindet, in mehreren Bildern alle Leiterenden 24 der Leiterendenanordnung 42 aufzunehmen und durch entsprechende Bildverarbeitung die Position aller dieser Leiterenden 24 in dem Koordinatensystem 10 zu erfassen.

Gegenüber dem Vergleichsbeispiel und bisherigen Lösungsansätzen ist die Laseroptik 2 der Lasereinrichtung 32.2 weiter von der Ebene der Leiterenden 24 entfernt. Die Scaneinrichtung 26.2 hat ein deutlich größeres Bearbeitungsfeld 9.2 welches sich bei dem ersten Ausführungsbeispiel über die gesamte Leiterendenanordnung 42 mit allen Leiterenden 24 erstreckt.

Die Halterung 34.2 ist stationär zu der Laseroptik 2 der Lasereinrichtung 32.2. Insbesondere sind sowohl die Laseroptik 2 als auch die Halterung 34.2 stationär beispielsweise an einem gemeinsamen Maschinenbett, angeordnet. Somit ist auch die Spannvorrichtung 7.2 stationär. Es lassen sich einfach eine Strömungserzeugungseinrichtung 46 und ein hierdurch erzeugter Luftvorhang 6.2 vorsehen.

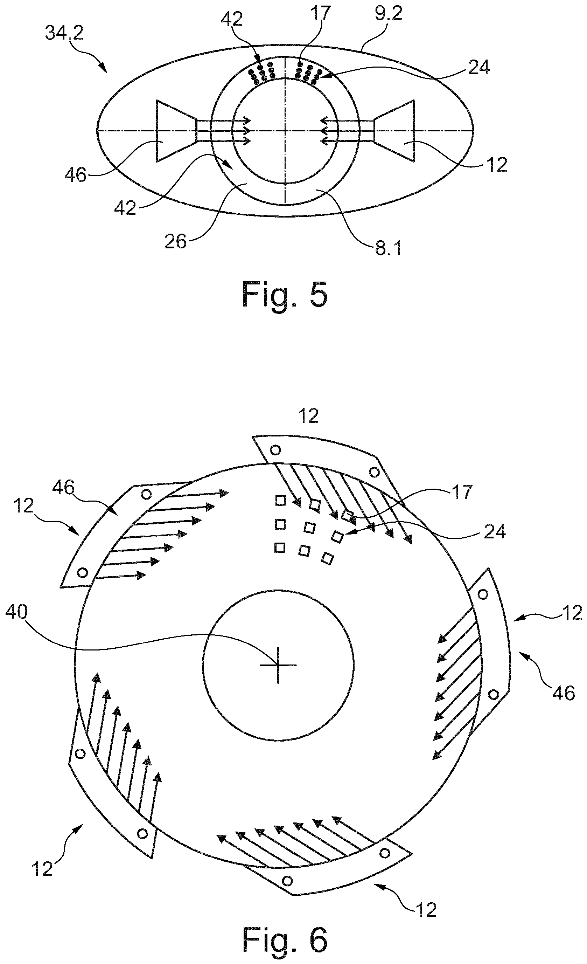

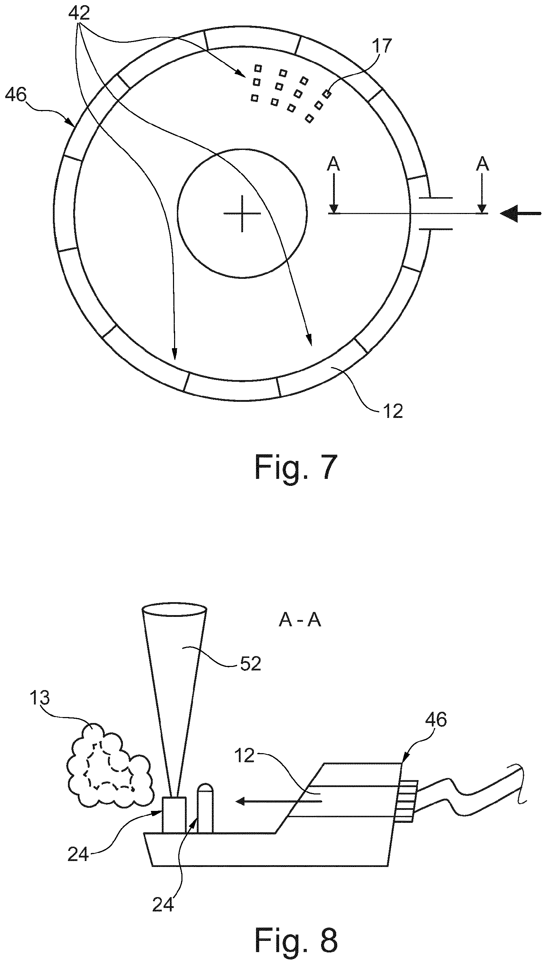

Zwei Ausführungsbeispiele der Strömungserzeugungseinrichtung 46 sind in den Figuren 6 und 7 dargestellt. Die Strömungserzeugungseinrichtung 46 weist mehrere Luftdüsen 12 auf. Bei der Ausführungsform gemäß Figur 6 ist der Luftvorhang 6.2 segmentiert mit schräg gerichteter Strömung ausgebildet. Bei der Ausgestaltung gemäß Figur 7 sind die Luftdüsen 12 umlaufend mit auf den Mittelpunkt orientierter Strömungsrichtung ausgebildet.

Wie die Figuren 4 und 8 zeigen, lässt sich mittels der Luftströmung Rauch/Schmauch 13 der beim Schweißen entsteht, von dem Stator 8.1 wegblasen.

Für das Laserstrahlschweißen von Statoren 8.1 ohne örtliche Manipulation des Stators 8.1 und der Schweißoptik - Laseroptik 2 - ist bei der Vorrichtung 22.2 gemäß der Ausführungsform der Erfindung die Kombination einer Flächenleuchte 3.2 zur vollständigen Ausleuchtung des Stators 8.1 in Kombination mit einer Brennweite der Lasereinrichtung 32.2 vorgesehen, die ausreichend große Scanfelder - Bearbeitungsbereich 9.2 - ermöglicht, um den Stator 8.1 vollumfänglich ohne örtliche Manipulation schweißen zu können.

Im Folgenden wird die Brennweite der Laseroptik 2 der Lasereinrichtung 32.2 gemäß Fig. 4 bis 9 erläutert. Diese ermöglicht folgendes Arbeitsfeld - d.h. Bearbeitungsbereich 9.2 auf Höhe der Leiterendenanordnung 42 - der Laseroptik 2.

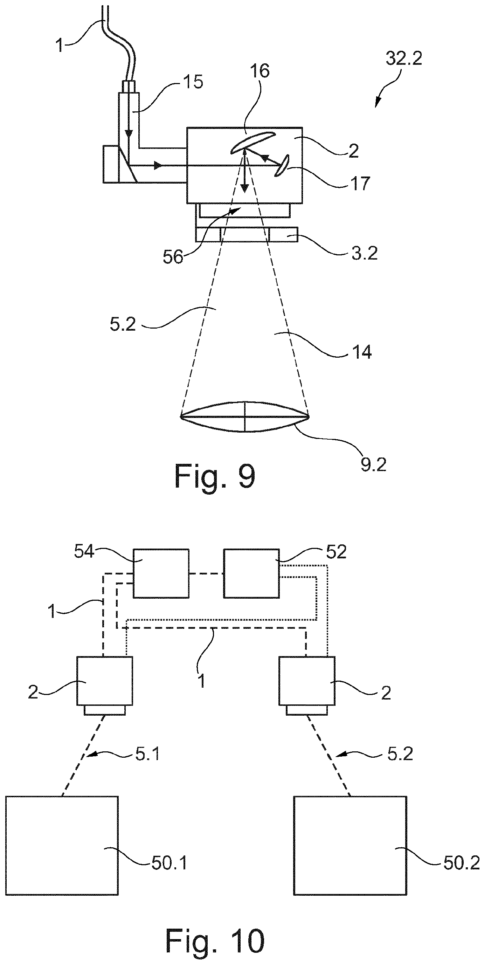

Für das Schweißen einer Gruppe von Leiterenden 24, insbesondere von Pinpaaren, wird im Vergleich zu dem Vergleichsbeispiel und sonstiger bekannter Systeme eine Brennweite der Laseroptik 2 derart gewählt, dass deutlich größere Bearbeitungsfelder 9.2, insbesondere mit einem Feldbereich von 300-350 mm oder größer, resultieren und somit der Stator 8.1 über den gesamten Umfang stationär geschweißt werden kann, siehe hierzu die Fig. 4 und 5. Die in der als Schweißoptik verbauten Ablenkspiegel 16, siehe hierzu Fig. 9, ermöglichen ein Auslenken des Laserstrahls 5.2, so dass alle Pinpositionen - d.h. alle Positionen aller zu verschweißender Gruppen von Leiterenden 24 - über den Umfang erreicht werden können.

Damit entfällt eine Rotation des Stators 8.1, um die zu verschweißenden Pinpaare in das Bearbeitungsfeld zu bewegen.

Für das Schweißen ist vorzugsweise ein Leistungsbereich der Laserstrahlquelle zwischen einem und acht Kilowatt, ein eingegrenzter Leistungsbereich von drei bis sechs Kilowatt und weiter bevorzugt ein noch enger gefasster Leistungsbereich zw. 4 und 6 kW vorgesehen. Für den Strahldurchmesser im Fokus sind vorzugsweise zwischen 100 und 200 µm zu wählen, um eine erwünschte Intensität des Strahls von I > 10⁶ W/cm² im Hinblick auf einen Prozess im Tiefschweißregime für hier insbesondere eingesetzte Materialien der Leiterenden 24 zu erreichen. Die Strahlablenkung erfolgt mit der Scaneinrichtung 36.2, die vorzugsweise durch eine 2D- oder 3D-Laseroptik, auch Scankopf oder Scannersysteme genannt, gebildet ist. Bei einer Ausgestaltung der Scaneinrichtung 36.2 wird der Laserstrahl 5.2 durch galvanometrische Ablenkspiegel 16 entlang der Schweißkontur geführt, wobei deren hohe Dynamik in Kombination mit deren geringen Gewicht eine hohe Ablenkgeschwindigkeit und somit hohe Schweißgeschwindigkeiten ermöglicht. Der Schweißprozess wird mit Geschwindigkeiten zwischen 800 und 1000 mm/s realisiert.

Die Laserstrahlung aus dem Laser wird über Lichtleitkabel 1 geführt, die einen Faserkerndurchmesser von 50 µm aufweisen, sodass der am Bauteil 26 resultierende Spotdurchmesser der Laserstrahls 5.2, der aus dem Abbildungsverhältnis der optischen Komponenten resultiert, im genannten Bereich liegt. Gegenüber dem Vergleichsbeispiel ist durch eine Reduktion des Faserkerndurchmessers, beispielsweise um Faktor zwei bei identischem Abbildungsverhältnis, eine Erhöhung des Arbeitsabstandes möglich, ohne dass Einbußen in der Intensität der Laserstrahlung resultieren. Aufgrund identischer Strahldurchmesser im Bereich der Leiterendenanordnung 42 können die zum Schweißen erforderlichen Intensitäten auf der Werkstückoberfläche abgebildet werden, ohne dass ein leistungsfähigerer Laser verwendet werden muss. Das Lichtleitkabel 1 ist über einen Stecker 15 an die Laseroptik 2 angeschlossen. Die möglichen Abstrahlwinkel des Laserstrahls 5.2 sind durch den Laserstrahl - Bearbeitungsbereich 14 angedeutet.

Im Folgenden werden bevorzugte Ausgestaltungen der Beleuchtungseinrichtung 28.2 näher erläutert.

Bei der Beleuchtungseinrichtung 28.2 erfolgt die Emission des Lichtes über einen Lichtleiter, sodass eine über die gesamte Fläche konstante Lichtcharakteristik resultiert. Das Licht wird über Einzelbohrungen, die in einem definierten Abstand angeordnet sind, emittiert. Diese sind entsprechend konfiguriert, sodass ein charakteristischer Abstrahlwinkel und somit eine konstante Lichtcharakteristik über die zu beleuchtende Fläche resultiert. Die Flächenleuchte 3.2 wird hinsichtlich Anzahl von Bohrungen, Lichtverteilung usw. derart dimensioniert, dass alle Leiterenden 24 der gesamten Leiterendenanordnung 42 so ausreichend beleuchtet werden, dass über mit der Kamera 44 von der gesamten Leiteranordnung 42 aufgenommene Bilder die Position jeder zu verschweißenden Gruppe von Leiterenden 24 ermittelbar ist. Die Emission des Lichtes aus der Flächenleuchte 3.2 mit dem Lichtkegel 4.2 erfolgt über die Bohrungen, wobei die Anzahl und Anordnung der Bohrungen über den Querschnitt entsprechend so gestaltet ist, dass eine gleichmäßige Lichtcharakteristik über die Fläche resultiert.

Im Folgenden werden Ausführungsformen der optischen Erkennungseinrichtung 30.2 und die Pindetektion über damit gebildete Visionssysteme näher erläutert.

Die Anzahl der Pinpaare, die in der z.B. durch ein Visionssystem gebildeten optischen Erkennungseinrichtung 30.2 detektiert werden, wird entsprechend des vorhandenen Bildausschnittes maximiert. Damit kann man im Vergleich zu Einzelaufnahmen, wie sie bei dem Vergleichsbeispiel verwendet werden, die Gesamtzeit für die Pindetektion reduzieren und somit einen prozesstechnischen Vorteil bilden. Die Detektion der Pinpaare erfolgt nicht über Sensoren, sondern über bildgebende Verfahren. Hierbei werden die Außenkanten der Pins in Quer- und Längsrichtung entsprechend der Hell-Dunkel-Unterschiede ermittelt. Der hieraus resultierende Mittelpunkt wird zur Positionierung der Schweißkontur verwendet.

Im Folgenden werden Ausführungsbeispiele der Strömungserzeugungseinrichtung 46 näher erläutert. Damit lässt sich mittels CrossJets 12 ein Luftvorhang 6.2 ausbilden.

Oberhalb der Prozesszone - Bearbeitungsbereich 9.2 im Bereich der Leiterendenanordnung 42 - wird umlaufend ein CrossJet 12 angebracht, der einen Luftvorhang 6.2 über der Prozesszone bildet, um Rauchgase und Schmauch 13 von der Schweißstelle zu blasen.

Wie in Fig. 6 dargestellt, kann eine segmentierte umlaufende Schaltung von Einzeldüsen 48 in entsprechender winkliger Anstellung vorgesehen sein, oder es kann, wie in Fig. 7 dargestellt, eine auf den Mittelpunkt orientierte Strömungsrichtung erreicht werden. Damit wird eine Abschirmung der auf nachfolgende Pins emittierten Laserleistung durch Rauchgase vermieden. Im Detail kann hierbei eine Absorption der Laserstrahlung 5.2 durch das Rauchgas 13 eliminiert werden, sodass ein konstanter Energieeintrag in das Bauteil 26 ermöglicht wird. Somit können Qualitätsschwankungen der Schweißergebnisse vermieden werden, da ein konstanter Energieeintrag vorliegt.

Die in Fig. 4 dargestellte Schweißstation 50 lässt sich als Bearbeitungsstation in eine Herstellanlage zum Herstellen des Bauteils 26 integrieren. Sie weist eine Steuerung 52 auf, in der entsprechende Steuerprogramme zum Steuern ihrer Komponenten als Software gespeichert sind.

In Fig. 10 ist schematisch eine weitere Ausführungsform der Vorrichtung 22.2 dargestellt. Diese Ausführungsform enthält mehrere der in Fig. 4 dargestellten Schweißstationen 50 als Schwesterstationen 50.1 und 50.2. Demnach hat die Vorrichtung 22.2 mehrere Laseroptiken 2 und mehrere Halterungen 34.2, die stationär angeordnet sind. Die Schweißstationen 50.1 und 50.2 teilen sich einen gemeinsamen Laser 54 und eine gemeinsame Steuerung 52. Damit lässt sich ein Timesharing der Laserleistung erreichen.

Bei einer weiteren, hier nicht näher dargestellten, aber derzeit bevorzugten Ausgestaltung ist die Lasereinrichtung 32.2 relativ zu der Halterung 34.2 verfahrbar. Dies ist insbesondere für besonders große Statoren vorteilhaft. Dabei ist die Lasereinrichtung 32.2 derart ausgebildet, dass sie in einer ersten Stellung einen ersten Teilbereich der Leiterendenanordnung 42, zum Beispiel ein erstes Segment des Stators mit einem Drittel aller Nuten, bearbeiten kann. Sind dann alle Leiterenden des ersten Teilsegments verschweißt, wird die Lasereinrichtung 32.2 relativ zum Stator in eine zweite Stellung bewegt, in der sie einen zweiten Teilbereich der Leiterendenanordnung 42 bearbeiten kann. Auch die Beleuchtungseinrichtung 28.2 kann entsprechend mit verfahren werden; sie ist dazu ausgebildet zumindest den gesamten jeweiligen Teilbereich ausleuchtet. Der Teilbereich wird so ausgelegt, dass wenigstens vier Gruppen von Leiterenden umfasst sind. Bei bevorzugten Ausgestaltungen können es max. 30 bis 40 Gruppen von Leiterenden sein. 20 sind durchaus üblich, in der Regel werden mehr als 10 Gruppen von Leiterenden gemeinsam in dem Teilbereich erfasst.

Ausführungsbeispiele der Erfindung haben gegenüber bisherigen Lösungsansätzen erhebliche Vorteile, sowohl prozesstechnischer Art als auch hinsichtlich des Kostenaufwands.

Im Folgenden werden prozesstechnische Vorteile erläutert. Aufgrund der entfallenden örtlichen Manipulation resultieren keine - oder zumindest viel weniger - handlingsbedingten Schweißpausenzeiten. Damit einhergehend resultieren geringere Gesamtprozesszeiten und somit eine deutlich geringere Komplexität der Anlage. Bei dem ersten Ausführungsbeispiel entfallen diverse Linear- und Rotationsachsen, d.h. insbesondere Antriebe oder Aktoren sowie deren Steuerung zum Durchführen von Linear- oder Rotationsbewegungen. Auch wenn noch - bei dem anderen Ausführungsbeispiel - eine verbleibende Bewegung zwischen wenigen Teilbereichen des Stators durchgeführt wird, ist dies prozesstechnisch und anlagentechnisch mit viel geringerem Aufwand als im Stand der Technik durchführbar. Im Falle des in Fig. 10 angedeuteten Timesharings der Laserleistung für zwei Laseroptiken 2 kann die Prozesszeit um Faktor 4 reduziert werden. Analog dazu ist eine Reduktion der Bearbeitungszeit bei einer Singlebearbeitung eines Stators 8.1 um Faktor 5,5 möglich.

Im Folgenden werden Vorteile hinsichtlich des Kostenaufwands erläutert. Ausgestaltungen der Erfindung haben unmittelbare Vorteile hinsichtlich der Taktzeit und dem Kostenaufwand für die Herstellvorrichtung zur Großserienproduktion der Bauteile 26. Einerseits entfallen Komponenten für das Handling des Stators 8.1 und gegebenenfalls auch der Laseroptik 2 oder sind bedeutend einfacher gestaltbar. Gleichzeitig lässt sich die Taktzeit reduzieren und damit der Ausstoß von Bauteilen erheblich erhöhen. Im günstigsten Fall können zusätzliche komplette Schweißstationen (mit Laser), die bei dem Vergleichsbeispiel zur Bearbeitung aller Bauteile bei einer vorgegebenen Produktionszahl notwendig wären, eingespart werden. Somit besteht ein erhebliches Einsparpotential. Neben dem Entfall kompletter zusätzlicher Schweißstationen kann die Anzahl relevanter Schlüsselkomponenten reduziert werden. Wie bei Fig. 10 angedeutet, kann ein Timesharing ermöglicht werden, so dass der erhebliche Kostenaufwand für einen zusätzlichen Laser eingespart werden kann und dennoch der gleiche Ausstoß wie zwei der Schweißstationen bei dem Vergleichsbeispiel mit jeweils eigenem Laser erzielbar ist. Insbesondere ist die Versorgung mehrerer Schweißstationen 50.1, 50.2 mit einer Strahlquelle möglich. Bei weiteren Ausgestaltungen ist auch die Versorgung mehrerer Schweißstationen mit einer Laseroptik 2 möglich.

Zum Beispiel erfolgt bei der Ausgestaltung der Fig. 10 an der ersten Schweißstation 50.1 die Erfassung der Positionen der Leiterenden 24 mittels der optischen Erkennungseinrichtung 30.2, während in der zweiten Schweißstation 50.2 mittels der Lasereinrichtung 32.2 geschweißt wird. Nach erfolgreicher Abarbeitung dieses Arbeitsschrittes tauschen die Arbeitsschritte die Schweißstationen 50.1, 50.2, d.h. es wird an der ersten Schweißstation 50.1 geschweißt, während an der zweiten Schweißstation 50.2 die Position der Leiterenden 24 des nächsten Bauteils 26 erfasst wird.

Demnach ist nur ein Laser 54 erforderlich, der die Laseroptiken 2 der Schweißstationen 50.1, 50.2 mit Laserstrahlung 5.2 versorgt.

Durch den Entfall von Bewegungsachsen an jeder Station ergibt sich somit ein Einsparpotential von mehreren 10⁵ €. Durch den Entfall einer ganzen Station ergibt sich ein Einsparpotential von mehr als 10⁶ €.

Selbstverständlich sind Abwandlungen der gezeigten Ausgestaltungen möglich. Wenngleich die Vorrichtung und das Verfahren am Beispiel der Herstellung von Statoren 8.1 erläutert worden ist, sind selbstverständlich auch andere Bauteile herstellbar, z.B. Rotoren. Die Vorrichtung und das Verfahren bieten überall dort erhebliche Vorteile, wo Leiterendenpaare oder sonstige Leiterendengruppen über einen relativ großen Bereich von in Serie herzustellenden Bauteilen 26 vorstehen und miteinander verbunden werden sollen.

Bei Ausgestaltungen der Vorrichtung 22.2 sowie des damit durchgeführten Verfahrens gemäß Ausgestaltungen der Erfindung muss man weder die Optik noch das Bauteil 26 bewegen, oder es müssen nur wenige Bewegungen zwischen der Bearbeitung weniger Teilbereiche durchgeführt werden. Der Laserstrahl 5.2 lässt sich während des Schweißens aller Pinpaare, die aus einer großen Anzahl von Nuten hervorstehen, nun allein durch die Laseroptik 2.2 der Lasereinrichtung 28.2 aus der nunmehr feststehenden oder mit geringerem Aufwand zu bewegenden Laseroptik auf alle zu verschweißenden Drahtenden eines Bauteils 26, wie Stator 8.1 oder Rotor lenken. Hierzu wird gegenüber dem Vergleichsbeispiel insbesondere einerseits eine Linse 56 in der Laseroptik 2 gewählt, die auf eine größere Brennweite fokussiert. Andererseits kann auch eine höhere Intensität aufgrund geringerer Durchmesser erreicht werden. Durch den größeren Arbeitsabstand lässt sich ein größeres Bearbeitungsfeld 9.2 erreichen. Durch Umlenkung des Laserstrahls können alle Drahtenden auch einer über eine größere Fläche verteilten Leiterendenanordnung 42 erreicht werden.

Weiter werden die Drahtenden gemeinsam ausgeleuchtet, so dass Bilderkennung der gesamten, auch über eine größere Fläche verteilten Leiterendenanordnung ermöglicht wird, mittels der die Ablenkung des Laserstrahls 5.2 gesteuert wird.

### Bezugszeichenliste:

- 1: Lichtleitkabel
- 2: Laseroptik (Scanner)
- 3.1: Ringlicht
- 3.2: Flächenlicht
- 4.1: Lichtkegel Ringlicht
- 4.2: Lichtkegel Flächenlicht
- 5.1: Laserstrahl
- 5.2: Laserstrahl
- 6.1: Luftvorhang
- 6.2: Luftvorhang
- 7.2: Spannvorrichtung
- 8.1: Stator
- 9.1: Bearbeitungsfeld auf Bauteil
- 9.2: Bearbeitungsfeld auf Bauteil
- 10: Koordinatensystem
- 11: Rotationsrichtung
- 12: Luftdüse
- 13: Rauchgas / Schmauch
- 14: Bearbeitungsbereich (Laserstrahl)
- 15: Stecker Lichtleitkabel
- 16: Ablenkspiegel
- 17: Hairpins
- 20.1: Schweißanordnung
- 20.2: Schweißanordnung
- 22.1: Vorrichtung
- 22.2: Vorrichtung
- 24: Leiterenden
- 26: Bauteil
- 28.1: Beleuchtungseinrichtung
- 28.2: Beleuchtungseinrichtung
- 30.1: optische Erkennungseinrichtung
- 30.2: optische Erkennungseinrichtung
- 32.1: Lasereinrichtung
- 32.2: Lasereinrichtung
- 34.1: Halterung
- 34.2: Halterung
- 36.1: Scaneinrichtung
- 36.2: Scaneinrichtung
- 40: zentrale Achse
- 42: Leiterendenanordnung
- 44: Kamera
- 46: Strömungserzeugungseinrichtung
- 50: Station
- 50.1: erste Schweißstation
- 50.2: zweite Schweißstation
- 52: Steuerung
- 54: Laser
- 56: Linse

## Patentansprüche

1. Vorrichtung (22.2) zum Verschweißen von Leiterenden (24), die an einem Bauteil (26) einer elektrischen Maschine in einer Leiterendenanordnung (42) angeordnet sind, umfassend:
eine Beleuchtungseinrichtung (28.2) zum Beleuchten zumindest eines Teilbereichs der Leiterendenanordnung (42),
eine optische Erkennungseinrichtung (30.2) zum Erkennen der Position der beleuchteten Leiterenden (24), wobei die optische Erkennungseinrichtung (30.2) dazu ausgebildet ist,
zumindest ein Bild zumindest des Teilbereichs der Leiterendenanordnung (42) mit mehreren zu verschweißenden Gruppen von Leiterenden aufzunehmen und durch Bildverarbeitung an dem Bild die Positionen der mehreren Gruppen von Leiterenden zu erfassen,
eine Lasereinrichtung (32.2), die einen Laserstrahl (5.2) abhängig von der erkannten Position auf jede miteinander zu verschweißende Gruppe von Leiterenden (24) zumindest des Teilbereichs der Leiterendenanordnung (42) leiten kann, und
eine Halterung (34.2), die dazu ausgebildet ist, das Bauteil (26) beim Schweißvorgang zum Schweißen aller Gruppen von Leiterenden zumindest des Teilbereichs der Leiterendenanordnung stationär zu der Lasereinrichtung (32.2) zu halten.

2. Vorrichtung (22.2) nach Anspruch 1,
**dadurch gekennzeichnet,**
**dass** die Beleuchtungseinrichtung (28.2) wenigstens eines oder mehrere der folgenden Merkmale aufweist:
2.1 eine Flächenleuchte (3.2) zum Ausleuchten der gesamten Leiterendenanordnung (42);
2.2 eine Anordnung von Einzellichtquellen;
2.3 eine Anordnung von Einzelbohrungen zum Bilden von Einzellichtquellen;
2.4 eine gleichmäßige Verteilung von Einzellichtquellen;
2.5 eine Lichtleiteinrichtung zum gleichmäßigen Verteilen von Lichtleistung auf Einzellichtquellen;
2.6 eine Ausleuchtoptik zum Ausleuchten der gesamten Leiterendenanordnung.

3. Vorrichtung (22.2) nach einem der voranstehenden Ansprüche,
**dadurch gekennzeichnet,**
**dass** die Lasereinrichtung (32.2)
3.1 stationär ist und/oder
3.2 eine Laseroptik (2) mit einem Laserstrahleingang zum Einstrahlen eines Laserstrahls (5.2), einer Scaneinrichtung (36.2) zum Lenken des Laserstrahls (5.2) und wenigstens einer Linse (56) zur Strahlbeeinflussung des Laserstrahls (5.2) ist oder aufweist; und/oder
3.3 zum Ablenken des Laserstrahls (5.2) über einen Bearbeitungsbereich (9.2) an der Leiterendenanordnung (42), welcher Bearbeitungsbereich (9.2) einen Durchmesser von 300 mm oder mehr hat, ausgebildet ist; und/oder
3.4 eine Laserstrahlquelle mit einem Leistungsbereich zwischen 1 und 8 kW, vorzugsweise zwischen 3 bis 6 kW und mehr bevorzugt zwischen 4 und 6 kW aufweist; und/oder
3.5 zum Erreichen eines Laserstrahls (5.2) mit Strahldurchmesser im Fokus zwischen 50 µm und 200 µm, vorzugsweise 100 µm und 200 µm ausgebildet ist; und/oder
3.6 derart ausgebildet ist, dass mittels Einstellung des Strahldurchmessers an der Leiterendenanordnung (42) eine Laserstrahlung mit Intensität I mit vorzugsweise l>10⁶ W/cm² erreicht wird; und/oder
3.7 ein Lichtleitkabel (1) zum Führen des Laserstrahls (5.2) hin zu der Scaneinrichtung (36.2) aufweist; und/oder
3.8 ein in Strahlrichtung vor der Scaneinrichtung (36.2) angeordnetes Lichtleitkabel (1) mit einem Faserkerndurchmesser von 50 µm bis 300 µm, bevorzugt 50 µm bis 150 µm aufweist; und/oder
3.9 während der Bearbeitung eines Teilbereichs der Leiterendenanordnung mit einer Vielzahl von zu verschweißenden Gruppen von Leiterenden stationär gehalten zu werden und lediglich zum Wechsel zwischen Teilbereichen verfahren zu werden.

4. Vorrichtung (22.2) nach einem der voranstehenden Ansprüche,
**dadurch gekennzeichnet,**
**dass** eine Strömungserzeugungseinrichtung (46) zum Erzeugen einer Gasströmung über die Leiterendenanordnung (42) vorgesehen ist und/oder
**dass** mehrere Düsen (48) vorgesehen sind zum Erzeugen einer zumindest teilweise in tangentialer Richtung gerichteten Gasströmung an der Leiterendenanordnung (42).

5. Vorrichtung (22.2) nach einem der voranstehenden Ansprüche,
**dadurch gekennzeichnet,**
**dass** eine stationäre Schweißschablone (7.2) mit Öffnungen vorgesehen ist, in denen die zu verschweißenden Leiterenden (24) der Leiterendenanordnung aufzunehmen (42) sind.

6. Vorrichtung (22.2) nach einem der voranstehenden Ansprüche,
umfassend eine erste und eine zweite Schweißstation (50.1, 50.2), die durch eine gemeinsame Laserstrahlquelle mit Laserleistung versorgt werden.

7. Schweißanordnung (20.2), umfassend eine Vorrichtung (22.2) nach einem der voranstehenden Ansprüche und das Bauteil (26).

8. Verfahren zum Verschweißen von Leiterenden (24), die an einem Bauteil (26) einer elektrischen Maschine in einer Leiterendenanordnung (42) angeordnet sind, umfassend:
a) Ausleuchten zumindest eines Teilbereichs der gesamten Leiterendenanordnung (42),
b) optisches Erkennen der Position der Leiterenden (24) der ausgeleuchteten Leiterendenanordnung (42) durch Aufnahme wenigstens eines Bildes zumindest des Teilbereichs der Leiterendenanordnung (42) und Durchführen einer Bildverarbeitung, um die Position jeder Gruppe von zu verschweißenden Leiterenden innerhalb des Teilbereichs der Leiterendenanordnung zu erfassen,
c) Ablenken eines Laserstrahls (5.2) abhängig von der erkannten Position auf jede miteinander zu verschweißende Gruppe von Leiterenden (24) zumindest für den Teilbereich der gesamten Leiterendenanordnung (42),
d) wobei das Bauteil (26) beim Schweißvorgang von Schritt c) relativ zu der den Laserstrahl (5.2) liefernden Lasereinrichtung (32.2) stationär gehalten wird.

9. Verfahren nach Anspruch 8,
**dadurch gekennzeichnet,**
**dass** Schritt a) wenigstens einen oder mehrere der folgenden Schritte umfasst:
a1) Ausleuchten der Leiterendenanordnung (42) mit einer über wenigstens den Teilbereich der oder die gesamte Bearbeitungsfläche, die die Leiterendenanordnung (42) einschließt, konstanten Lichtcharakteristik;
a2) Leiten von Licht zur Lichtemission zwecks Ausleuchtens mittels Lichtleiter,
a3) Ausleuchten mittels einer gleichmäßigen Anordnung von Einzellichtquellen;
a4) Emittieren des Lichts durch eine Anordnung von Bohrungen als Einzellichtquellen;
a5) Leiten und Beeinflussen des Lichts zum Ausleuchten durch wenigstens eine Ausleuchtoptik.

10. Verfahren nach Anspruch 8 oder 9,
**dadurch gekennzeichnet,**
**dass** Schritt b) wenigstens einen oder mehrere der folgenden Schritte umfasst:
b1) Erkennen der Lage von zu verschweißenden Leiterenden (24) mittels bildgebender Verfahren;
b2) Aufnahme wenigstens eines Bildes wenigstens eines Ausschnitts der die Leiterendenanordnung (42) einschließenden Bearbeitungsfläche;
b3) Aufnahme wenigstens eines Bildes der gesamten Leiterendenanordnung (42);
b4) Erkennen von Kanten von Leiterenden (24) in einem aufgenommenen Bild und
Berechnen der Position einer Mitte einer Gruppe zu verschweißender Leiterenden (24) anhand der erfassten Kanten;
b5) Erkennen unterschiedlich gerichteter Kanten von Leiterenden (24) in einem aufgenommenen Bild, um eine Position einer Gruppe zu verschweißender Leiterenden zu erfassen;
b6) Aufnahme wenigstens eines Bildes durch eine in oder an einer stationären Laseroptik (2), die eine Scaneinrichtung (36.2) zum Durchführen von Schritt c) enthält, angeordnete Kamera (44);
b7) Aufnahme wenigstens eines Bildes von wenigstens 4 bis 40, vorzugsweise wenigstens 10 bis 25 Gruppen von Leiterenden (24) und Erfassung der Position dieser Gruppen anhand von Bildverarbeitung.

11. Verfahren nach einem der Ansprüche 8 bis 10,
**dadurch gekennzeichnet,**
**dass** Schritt c) wenigstens einen oder mehrere der folgenden Schritte umfasst:
c1) Leiten von Laserlicht mit einer Leistung von 1 bis 8 kW, vorzugsweise 3 bis 6 KW, besonders bevorzugt 4 bis 6 kW zu einer Scaneinrichtung;
c2) Leiten von Laserlicht zu einer Scaneinrichtung mittels einer Lichtleitfaser mit einem Faserkerndurchmesser von 50 µm bis 300 µm, bevorzugt 50 µm bis 150 µm;
c3) Einstellen eines Strahldurchmessers von 100 µm bis 200 µm an der Schweißstelle auf der zu verschweißenden Gruppe von Leiterenden (24);
c4) Einstellen eines Strahldurchmessers auf der Schweißstelle auf der zu verschweißenden Gruppe von Leiterenden (24) derart, dass eine Strahlintensität von vorzugsweise mehr als 10⁶ W/cm² erreicht wird;
c5) Durchführen des Schweißprozesses mit Geschwindigkeiten von 200 bis 1000 mm/s, vorzugsweise 600-1000 mm/s, bevorzugt 800 mm/s bis 1000 mm/s;
c6) Scannen des Laserstrahls (5.2) über einen Bearbeitungsbereich (9.2) an der Leiterendenanordnung (42), welcher Bearbeitungsbereich (9.2) einen Durchmesser von 300 mm oder mehr hat.

12. Verfahren nach einem der Ansprüche 8 bis 11,
**dadurch gekennzeichnet,**
**dass** Schritt d) einen oder mehrere der folgenden Schritte umfasst:
d1) stationäres Halten des Bauteils (26);
d2) Anordnen der Leiterendenanordnung (42) in einer stationären Schweißschablone (7.2);
d3) Verwenden einer stationären Lasereinrichtung (32.2), die die Scaneinrichtung (36.2) und wenigstens eine Linse (56) enthält;
d4) Verwenden einer verfahrbaren Lasereinrichtung (32.2), die die Scaneinrichtung (36.2) und wenigstens eine Linse (56) enthält und bei der Bearbeitung des Teilbereichs der Leiterendenanordnung, der vorzugsweise wenigstens ein Sechstel, ein Fünftel, ein Viertel, ein Drittel oder die Hälfte oder wenigstens 4 bis wenigstens 10 aller Gruppen von Leiterenden umfasst, stationär zu der Halterung gehalten wird und nur zum Wechsel von einem Teilbereich zum nächsten verfahren wird.

13. Verfahren nach einem der Ansprüche 8 bis 12,
**gekennzeichnet durch** wenigstens einen oder mehrere der folgenden Schritte:
e) Erzeugen einer Gasströmung über die Leiterendenanordnung (42) während des Schweißens;
e1) Erzeugen von mehreren zumindest teilweise in tangentialer Richtung gerichteter Einzelgasströme zum Erzeugen einer umlaufenden Gasströmung über der Leiterendenanordnung (42) während des Schweißens;
e2) Erzeugen einer radial gerichteten Gasströmung über die Leiterendenanordnung (42).

14. Verfahren nach einem der Ansprüche 8 bis 13,
**gekennzeichnet durch** Durchführen des Verfahrens an einer ersten Schweißstation (50.1) und an einer zweiten Schweißstation (50.2) unter Nutzung desselben Lasers (54) zum Erzeugen der Laserstrahlung (5.2).

15. Verfahren nach Anspruch 14,
wobei die Schritte a) und b) an einer der Schweißstationen (50.1, 50.2) wechselweise mit dem Schritt c) an der anderen Schweißstation (50.2, 50.1) gleichzeitig ablaufen.

## Claims

1. A device (22.2) for welding together conductor ends (24) disposed on a component (26) of an electric machine in a conductor end assembly (42), comprising:
an illuminating device (28.2) for illuminating at least a partial area of the conductor end assembly (42),
an optical recognition device (30.2) for recognizing the position of the illuminated conductor ends (24), wherein the optical recognition device (30.2) is configured for recording at least one image of at least the partial area of the conductor end assembly (42) with several conductor end groups to be welded together and detecting the positions of the several conductor end groups by image processing on the image,
a laser device (32.2) capable of directing, depending on the recognized position, a laser beam (5.2) onto each group of conductor ends (24), which is to be welded together, of at least the partial area of the conductor end assembly (42), and
a mount (34.2), which is configured to hold the component (26) stationary relative to the laser device (32.2) during the welding process for welding together all conductor end groups of at least the partial area of the conductor end assembly.

2. The device (22.2) according to claim 1,
**characterized in that**
the illuminating device (28.2) has at least one or several of the following features:
2.1 a panel lamp (3.2) for illuminating the entire conductor end assembly (42);
2.2 an assembly of individual light sources;
2.3 an assembly of individual bores for forming individual light sources;
2.4 a uniform distribution of individual light sources;
2.5 a light conducting device for uniformly distributing light power to individual light sources;
2.6 an illuminating optics assembly for illuminating the entire conductor end assembly.

3. The device (22.2) according to any one of the preceding claims,
**characterized in that**
the laser device (32.2)
3.1 is stationary and/or
3.2 is or includes a laser optics assembly (2) with a laser beam entrance for inputting a laser beam (5.2), a scanning device (36.2) for directing the laser beam (5.2) and at least one lens (56) for influencing the laser beam (5.2); and/or
3.3 is configured for deflecting the laser beam (5.2) over a processing area (9.2) at the conductor end assembly (42), which processing area (9.2) has a diameter of 300 mm or more; and/or
3.4 has a laser beam source with a power range between 1 and 8 kW, preferably between 3 to 6 kW, and more preferably between 4 and 6 kW; and/or
3.5 is configured for obtaining a laser beam (5.2) with a beam diameter at the focus of between 50 µm and 200 µm, preferably between 100 µm and 200 µm; and/or
3.6 is configured in such a manner that a laser radiation with an intensity I of preferably l>10⁶ W/cm² is obtained by setting the beam diameter at the conductor end assembly (42); and/or
3.7 has a light conducting cable (1) for guiding the laser beam (5.2) towards the scanning device (36.2); and/or
3.8 has a light conducting cable (1) with a fiber core diameter of 50 µm to 300 µm, preferably of 50 µm to 150 µm, disposed upstream of the scanning device (36.2) in the beam direction; and/or
3.9 to be held in a stationary manner during the processing of a partial area of the conductor end assembly with a plurality of conductor end groups to be welded together and to be moved only in order to switch between partial areas.

4. The device (22.2) according to any one of the preceding claims,
**characterized in that**
a flow generation device (46) for generating a gas flow over the conductor end assembly (42) is provided, and/or
that several nozzles are provided (48) for generating a gas flow, which is at least partially directed in the tangential direction, at the conductor end assembly (42).

5. The device (22.2) according to any one of the preceding claims,
**characterized in that**
a stationary welding template (7.2) with openings, in which the conductor ends (24) of the conductor end assembly (42) that are to be welded together are to be accommodated, is provided.

6. The device (22.2) according to any one of the preceding claims, comprising a first and a second welding station (50.1, 50.2), which are supplied with laser power by a common laser beam source.

7. A welding assembly (20.2), comprising a device (22.2) according to any one of the preceding claims and the component (26).

8. A method for welding together conductor ends (24) disposed on a component (26) of an electric machine in a conductor end assembly (42), comprising:
a) illuminating at least a partial area of the entire conductor end assembly (42),
b) optically recognizing the position of the conductor ends (24) of the illuminated conductor end assembly (42) by recording at least one image of at least the partial area of the conductor end assembly (42) and carrying out image processing in order to detect the position of each group of conductor ends to be welded together within the partial area of the conductor end assembly,
c) deflecting a laser beam (5.2), depending on the recognized position, onto each group of conductor ends (24), which is to be welded together, at least for the partial area of the entire conductor end assembly (42),
d) wherein the component (26) is held stationary, during the welding process of step c), relative to the laser device (32.2) delivering the laser beam (5.2).

9. The method according to claim 8,
**characterized in that**
step a) comprises at least one or more of the following steps:
a1) illumination of the conductor end assembly (42) with light characteristics that are constant across at least the partial area or the entire processing surface including the conductor end assembly (42);
a2) guiding light for light emission for the purpose of illuminating by means of a light conductor,
a3) illumination by means of a uniform assembly of individual light sources;
a4) emitting the light through an assembly of bores as individual light sources;
a5) guiding and influencing the light for illumination by means of at least one illuminating optics assembly.

10. The method according to claim 8 or 9,
**characterized in that**
step b) comprises at least one or more of the following steps:
b1) recognizing the position, by means of imaging processes, of conductor ends (24) to be welded together;
b2) recording at least one image of at least one section of the processing surface including the conductor end assembly (42);
b3) recording at least one image of the entire conductor end assembly (42);
b4) recognizing edges of conductor ends (24) in a recorded image and computing, based on the recognized edges, the position of a center of a group of conductor ends (24) to be welded together;
b5) recognizing differently oriented edges of conductor ends (24) in a recorded image in order to detect a position of a group of conductor ends to be welded together;
b6) recording at least one image by means of a camera (44) disposed in or on a stationary laser optics assembly (2) including a scanning device (36.2) for carrying out step c);
b7) recording at least one image of at least 4 to 40, preferably at least 10 to 25 groups of conductors (24) and detecting the position of these groups by means of image processing.

11. The method according to any one of the claims 8 to 10,
**characterized in that**
step c) comprises at least one or more of the following steps:
c1) guiding laser light with a power of 1 to 8 kW, preferably 3 to 6 kW,
particularly preferably 4 to 6 kW, to a scanning device;
c2) guiding laser light to a scanning device by means of a light conducting fiber with a fiber core diameter of 50 µm to 300 µm, preferably of 50 µm to 150 µm;
c3) setting a beam diameter of 100 µm to 200 µm at the welding site on the group of conductor ends (24) to be welded together;
c4) setting a beam diameter at the welding site on the group of conductor ends (24) to be welded together, such that a beam intensity of preferably more than 10⁶ W/cm² is attained;
c5) carrying out the welding process at speeds of 200 to 1000 mm/s, preferably 600-1000 mm/s, preferably 800 mm/s to 1000 mm/s;
c6) scanning the laser beam (5.2) over a processing area (9.2) at the conductor end assembly (42), which processing area (9.2) has a diameter of 300 mm or more.

12. The method according to any one of the claims 8 to 11,
**characterized in that**
step d) comprises at least one or more of the following steps:
d1) holding the component (26) stationary;
d2) disposing the conductor end assembly (42) in a stationary welding template (7.2);
d3) using a stationary laser device (32.2) including the scanning device (36.2) and at least one lens (56);
d4) using a movable laser device (32.2), which includes the scanning device (36.2) and at least one lens (56) and which, during the processing of the partial area of the conductor end assembly, which preferably includes at least one sixth, one fifth, one quarter, one third, or half, or at least 4 to at least 10 of all conductor end groups, is held stationary relative to the mount and is only moved for switching from one partial area to the next.

13. The method according to any one of the claims 8 to 12,
**characterized by** at least one or several of the following steps:
e) generating a gas flow over the conductor end assembly (42) during welding;
e1) generating several individual gas flows directed at least partially in the tangential direction, in order to generate a circulating gas flow over the conductor end assembly (42) during welding;
e2) generating a radially directed gas flow over the conductor end assembly (42).

14. The method according to any one of the claims 8 to 13,
**characterized by** carrying out the method at a first welding station (50.1) and at a second welding station (50.2) using the same laser (54) for generating the laser radiation (5.2).

15. The method according to claim 14,
wherein, simultaneously, the steps a) and b) run on one of the welding stations (50.1, 50.2), alternating with step c) on the other welding station (50.2, 50.1).

## Revendications

1. Dispositif (22.2) de soudage d'extrémités de conducteurs (24) qui sont disposées sur un composant (26) d'une machine électrique dans un ensemble d'extrémités de conducteurs (42), comprenant:
un dispositif d'éclairage (28.2) pour éclairer au moins une zone partielle de l'ensemble d'extrémités de conducteurs (42),
un dispositif de reconnaissance optique (30.2) pour reconnaître la position des extrémités de conducteurs (24) éclairées, le dispositif de reconnaissance optique (30.2) étant conçu pour prendre au moins une image d'au moins la zone partielle de l'ensemble d'extrémités de conducteurs (42) avec plusieurs groupes d'extrémités de conducteurs à souder et pour détecter par traitement d'image sur l'image les positions des plusieurs groupes d'extrémités de conducteurs,
un dispositif laser (32.2) qui peut diriger un faisceau laser (5) en fonction de la position détectée sur chaque groupe d'extrémités de conducteurs (24) à souder entre eux au moins de la zone partielle de l'ensemble d'extrémités de conducteurs (42), et
un support (34.2) qui est conçu pour maintenir le composant (26) stationnaire par rapport au dispositif laser (32.2) lors du processus de soudage pour souder tous les groupes d'extrémités de conducteurs d'au moins la zone partielle de l'ensemble d'extrémités de conducteurs.

2. Dispositif (22.2) selon la revendication 1,
**caractérisé en ce que**
le dispositif d'éclairage (28.2) présente au moins une ou plusieurs des caractéristiques suivantes:
2.1 une lampe de surface (3.2) pour éclairer la totalité de l'ensemble d'extrémités de conducteurs (42);
2.2 un agencement de sources lumineuses individuelles;
2.3 un agencement de trous individuels pour former des sources lumineuses individuelles;
2.4 une répartition uniforme de sources lumineuses individuelles;
2.5 un dispositif de guidage de lumière pour répartir uniformément la puissance lumineuse sur des sources lumineuses individuelles;
2.6 une optique d'éclairage pour éclairer la totalité de l'ensemble des extrémités de conducteurs.

3. Dispositif (22.2) selon l'une quelconque des revendications précédentes,
**caractérisé en ce que**
**en ce que** le dispositif laser (32.2)
3.1 est stationnaire et/ou
3.2 présente une optique laser (2) avec une entrée de faisceau laser pour l'émission d'un faisceau laser (5.2), un dispositif de balayage (36.2) pour le guidage du faisceau laser (5.2) et au moins une lentille (56) pour l'influence du faisceau sur le faisceau laser (5.2); et/ou
3.3 est conçu pour dévier le faisceau laser (5.2) sur une zone de traitement (9.2) sur l'ensemble d'extrémités de conducteurs (42), laquelle zone de traitement (9.2) a un diamètre de 300 mm ou plus; et/ou
3.4 présente une source de faisceau laser avec une plage de puissance comprise entre 1 et 8 kW, de préférence entre 3 et 6 kW et plus préférablement entre 4 et 6 kW; et/ou
3.5 est conçue pour obtenir un faisceau laser (5.2) avec un diamètre de faisceau au foyer compris entre 50 µm et 200 µm, de préférence entre 100 µm et 200 µm; et/ou
3.6 est conçu de telle sorte qu'un rayonnement laser d'intensité I, de préférence l>10⁶ W/cm², est obtenu par réglage du diamètre du faisceau sur l'ensemble d'extrémités de conducteurs (42); et/ou
3.7 présente un câble à fibres optiques (1) pour guider le faisceau laser (5.2) vers le dispositif de balayage (36.2); et/ou
3.8 présente un câble à fibre optique (1) disposé en amont du dispositif de balayage (36.2) dans le sens du faisceau et ayant un diamètre d'âme de fibre de 50 µm à 300 µm, de préférence de 50 µm à 150 µm; et/ou
3.9 est conçu à être maintenu stationnaire pendant le traitement d'une zone partielle de l'ensemble d'extrémités de conducteurs avec une pluralité de groupes d'extrémités de conducteurs à souder et à être déplacé uniquement pour le changement entre des zones partielles.

4. Dispositif (22.2) selon l'une quelconque des revendications précédentes,
**caractérisé en ce**
**qu'**il est prévu un dispositif de génération de flux (46) pour générer un flux de gaz sur l'ensemble d'extrémités de conducteurs (42) et/ou
en ce que plusieurs buses (48) sont prévues pour générer un flux de gaz orienté au moins partiellement dans une direction tangentielle sur l'ensemble d'extrémités de conducteurs (42).

5. Dispositif (22.2) selon l'une quelconque des revendications précédentes,
**caractérisé en ce**
**qu'**il est prévu un gabarit de soudage stationnaire (7.2) avec des ouvertures dans lesquelles les extrémités de conducteurs (24) à souder de l'ensemble d'extrémités de conducteurs doivent être reçues (42).

6. Dispositif (22.2) selon l'une quelconque des revendications précédentes, comprenant un premier et un deuxième poste de soudage (50.1, 50.2) alimentés en puissance laser par une source de faisceau laser commune.

7. Ensemble de soudage (20.2), comprenant un dispositif 22.2 selon l'une des revendications précédentes et le composant (26).

8. Procédé de soudage des extrémités de conducteurs (24) qui sont disposées sur un composant (26) d'une machine électrique dans un ensemble d'extrémités de conducteurs (42), comprenant:
a) éclairage d'au moins une zone partielle de l'ensemble d'extrémités de conducteurs (42),
b) reconnaître optiquement la position des extrémités de conducteurs (24) de l'ensemble d'extrémités de conducteurs éclairé (42) en prenant au moins une image d'au moins la partie de l'ensemble d'extrémités de conducteurs (42) et en effectuant un traitement d'image pour détecter la position de chaque groupe d'extrémités de conducteurs à souder dans la partie de l'ensemble d'extrémités de conducteurs,
c) dévier un faisceau laser (5.2) en fonction de la position détectée sur chacun des groupes d'extrémités de conducteurs (24) à souder entre eux, au moins pour la zone partielle de la totalité de l'ensemble d'extrémités de conducteurs (42),
d) le composant (26) étant maintenu stationnaire par rapport au dispositif laser (32.2) fournissant le faisceau laser (5.2) lors du processus de soudage de l'étape c).

9. Procédé selon la revendication 8,
**caractérisé en ce que**
l'étape a) comprend au moins une ou plusieurs des étapes suivantes:
a1) éclairer l'ensemble d'extrémités de conducteurs (42) avec une caractéristique de lumière constante sur au moins la partie ou la totalité de la surface de traitement qui comprend l'ensemble d'extrémités de conducteurs (42);
a2) diriger la lumière vers l'émission de lumière pour l'éclairage au moyen d'un guide de lumière,
a3) éclairage au moyen d'une disposition uniforme de sources lumineuses individuelles;
a4) émission de la lumière au moyen d'une disposition de trous comme sources lumineuses individuelles;
a5) guider et influencer la lumière pour l'illumination par au moins une optique d'illumination.

10. Procédé selon la revendication 8 ou 9,
**caractérisé en ce que**
l'étape b) comprend au moins une ou plusieurs des étapes suivantes:
b1) reconnaissance de la position des extrémités de conducteurs (24) à souder au moyen de procédés d'imagerie;
b2) capture d'au moins une image d'au moins un cadrage de la surface de traitement incluant l'ensemble d'extrémités de conducteurs (42);
b3) capture d'au moins une image de la totalité de l'ensemble d'extrémités de conducteurs (42);
b4) reconnaissance des bords d'extrémités de conducteurs (24) dans une image capturée et calcul de la position d'un centre d'un groupe d'extrémités de conducteurs (24) à souder à l'aide des bords détectés;
b5) reconnaissance des bords d'extrémités de conducteurs (24) orientés différemment dans une image capturée afin de détecter une position d'un groupe d'extrémités de conducteurs à souder;
b6) capture d'au moins une image par une caméra (44) disposée dans ou sur une optique laser fixe (2) qui contient un dispositif de balayage (36.2) pour l'exécution de l'étape c);
b7) capture d'au moins une image d'au moins 4 à 40, de préférence d'au moins 10 à 25 groupes d'extrémités de conducteurs (24) et détection de la position de ces groupes à l'aide d'un traitement d'image.

11. Procédé selon l'une quelconque des revendications 8 à 10,
**caractérisé en ce que**
l'étape c) comprend au moins une ou plusieurs des étapes suivantes:
c1) diriger une lumière laser d'une puissance de 1 à 8 kW, de préférence de 3 à 6 kW, de manière particulièrement préférée de 4 à 6 kW vers un dispositif de balayage;
c2) diriger une lumière laser vers un dispositif de balayage au moyen d'une fibre optique ayant un diamètre de coeur de fibre de 50 µm à 300 µm, de préférence de 50 µm à 150 µm;
c3) ajuster un diamètre de faisceau de 100 µm à 200 µm au point de soudage sur le groupe d'extrémités de conducteurs (24) à souder;
c4) ajuster un diamètre de faisceau à l'endroit de la soudure sur le groupe d'extrémités de conducteurs (24) à souder, de manière à obtenir une intensité de faisceau de préférence supérieure à 10⁶ W/cm²;
c5) réaliser le processus de soudage à des vitesses de 200 à 1000 mm/s, de préférence de 600 à 1000 mm/s, préférentiellement de 800 mm/s à 1000 mm/s;
c6) balayage du faisceau laser (5.2) sur une zone de traitement (9.2) sur l'ensemble d'extrémités de conducteurs (42), laquelle zone de traitement (9.2) a un diamètre de 300 mm ou plus.

12. Procédé selon l'une quelconque des revendications 8 à 11,
**caractérisé en ce que**
l'étape d) comprend une ou plusieurs des étapes suivantes:
d1) maintien stationnaire du composant (26);
d2) mise en place de l'ensemble d'extrémités de conducteurs (42) dans un gabarit de soudage stationnaire (7.2);
d3) utiliser un dispositif laser fixe (32.2) comprenant le dispositif de balayage (36.2) et au moins une lentille (56);
d4) utiliser un dispositif laser mobile (32.2) qui contient le dispositif de balayage (36.2) et au moins une lentille (56) et qui, lors du traitement de la zone partielle de l'ensemble d'extrémités de conducteurs, qui comprend de préférence au moins un sixième, un cinquième, un quart, un tiers ou la moitié ou au moins 4 à au moins 10 de tous les groupes d'extrémités de conducteurs, est maintenu stationnaire par rapport au support et est déplacé uniquement pour passer d'une zone partielle à la suivante.

13. Procédé selon l'une quelconque des revendications 8 à 12,
**caractérisé par** au moins une ou plusieurs des étapes suivantes:
e) générer un flux de gaz sur l'ensemble d'extrémité de conducteur (42) pendant le soudage;
e1) générer plusieurs flux de gaz individuels dirigés au moins partiellement dans une direction tangentielle pour générer un flux de gaz circulant sur l'ensemble d'extrémités de conducteurs (42) pendant le soudage;
e2) générer un flux de gaz orienté radialement sur l'ensemble d'extrémités de conducteurs (42).

14. Procédé selon l'une quelconque des revendications 8 à 13,
**caractérisé par** la mise en oeuvre du procédé à un premier poste de soudage (50.1) et à un deuxième poste de soudage (50.2) en utilisant le même laser (54) pour générer le rayonnement laser (5.2).

15. Procédé selon la revendication 14,
dans lequel les étapes a) et b) se déroulent sur l'un des postes de soudage (50.1, 50.2) en alternance avec l'étape c) sur l'autre poste de soudage (50.2, 50.1) simultanément.
